# EUROPÄISCHE PATENTSCHRIFT

(11) **EP 0 948 577 B1**
(45) Veröffentlichungstag und Bekanntmachung des Hinweises auf die Patenterteilung: **12.12.2001**
(21) Anmeldenummer: 97913167.9
(22) Anmeldetag: 21.10.1997
(51) Int. Cl.: C09K 7/06, C09K 7/02

(54) **VERWENDUNG VON VERBESSERTEN MEHRKOMPONENTENGEMISCHEN FÜR DEN ERDREICHAUFSCHLUSS**
USE OF ENHANCED MULTICOMPONENT MIXTURES FOR SOIL DECOMPOSITION
UTILISATION DE MELANGES MULTICOMPOSANTS AMELIORES POUR LA DESAGREGATION DU SOL

(30) Priorität: 30.10.1996 DE 19643840
(43) Veröffentlichungstag der Anmeldung: 13.10.1999
(60) Teilanmeldung: 00102915.6
(73) Patentinhaber: Cognis Deutschland GmbH, 40589 Düsseldorf (DE)
(72) Erfinder: MÜLLER, Heinz, D-40789 Monheim (DE); HEROLD, Claus-Peter, D-40822 Mettmann (DE); FÖRSTER, Thomas, D-40699 Erkrath (DE); VON TAPAVICZA, Stephan, D-40699 Erkrath (DE); FUES, Johann-Friedrich, D-41516 Grevenbroich (DE); CLAAS, Marcus, D-40723 Hilden (DE)
(86) Internationale Anmeldenummer: EP9705797
(87) Internationale Veröffentlichungsnummer: WO9818881

(56) Entgegenhaltungen:
- EP-A- 0 117 970
- EP-A- 0 213 321
- EP-A- 0 627 481
- WO-A-92/02594
- WO-A-92/13926
- WO-A-93/16145
- DE-A- 3 819 193

## Beschreibung

Die Erfindung beschreibt die Verwendung von Emulgatoren in fließund pumpfähigen Arbeitsmitteln für den Erdreichaufschluß, insbesondere Bohrlochbehandlungsmittel, die sowohl eine Ölphase wie eine wäßrige Phase aufweisen. Als charakteristisches Beispiel für Behandlungsmittel dieser Art wird im nachfolgenden die Erfindung anhand von Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf eingeschränkt. Verwandte und durch die Erfindung betroffene Arbeitsgebiete sind beispielsweise spotting-fluids, spacer, packer-fluids, Hilfsflüssigkeiten für work over und Stimulierung und für das Fracturing.

Der Einsatz der Mehrkomponentengemische als fließfähige Bohrlochbehandlungsmittel hat besondere Bedeutung für die Erschließung von Erdöl und Erdgas, insbesondere im off-shore Bereich, ist aber nicht darauf eingeschränkt. Die neuen Systeme können allgemein Verwendung bei landgestützten Bohrungen finden, beispielsweise beim Geothermiebohren, beim Wasserbohren, bei der Durchführung geowissenschaftlicher Bohrungen und bei Bohrungen im Bergbaubereich.

### Zum Stand der Technik

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können:

Rein wäßrige Bohrspülflüssigkeiten, Bohrspülsysteme auf Ölbasis, die in der Regel als sogenannte Invert-Emulsionsschlämme eingesetzt werden sowie die Wasser-basierten O/W-Emulsionen, die in der geschlossenen wäßrigen Phase eine heterogene feindisperse Ölphase enthalten.

Bohrspülungen auf geschlossener Ölbasis sind im allgemeinen als Drei-Phasen-System aufgebaut: Öl, Wasser und feinteilige Feststoffe. Die wäßrige Phase ist dabei heterogen fein-dispers in der geschlossenen Ölphase verteilt. Es ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P.A. Boyd et al. "New Base Oil Used in Low-Toxicity Oil Muds" Journal of Petroleum Technology, 1985, 137 bis 142 sowie R.B. Bennett "New Drilling Fluid Technology - Mineral Oil Mud" Journal of Petroleum Technology, 1984, 975 bis 981 sowie die darin zitierte Literatur.

Bohrspülflüssigkeiten auf Basis Wasser-basierter O/W-Emulsionssysteme nehmen in ihren Gebrauchseigenschaften eine Zwischenstellung ein zwischen den rein wäßrigen Systemen und den Öl-basierten Invertspülungen. Ausführliche Sachinformationen finden sich hier in der einschlägigen Fachliteratur, verwiesen sei beispielsweise auf das Fachbuch George R. Gray und H.C.H. Darley "Composition in Properties of Oil Well Drilling Fluids", 4. Auflage, 1980/81. Gulf Publishing Company, Houston und die umfangreiche darin zitierte Sach- und Patentliteratur sowie auf das Handbuch "Applied Drilling Engineering", Adam T. Borgoyne, Jr. et al., First Printing Society of Petroleum Engineers, Richardson, Texas (USA).

Unbestritten sind auch noch heute die Öl-basierten W/O-Invertsysteme die sichersten Arbeitsmittel, insbesondere beim Durchbohren von wassersensitiven Tonschichten. Die geschlossene Ölphase der W/0-Invertemutsion bildet an der Oberfläche der erbohrten Gesteinsschichten und der in die Bohrspülung eingetragenen cuttings eine geschlossene semipermeable Membrane aus, so daß die Steuerung und Kontrolle der Richtung einer potentiellen Wasserdiffusion möglich wird. Die durch den Einsatz der W/O-Invertspülungen mögliche Optimierung des Arbeitsergebnisses wird bis heute durch keinen anderen Spülungstyp erreicht.

Bohrspülungen der zuletzt geschilderten Art und vergleichsweise aufgebaute andere Bohrlochbehandlungsmittel verwendeten ursprünglich Mineralölfraktionen als Ölphase. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen. Insbesondere in dem letzten Jahrzehnt sind von der beteiligten Fachwelt eine Vielzahl von Vorschlägen zum Austausch der Mineralölfraktionen gegen ökologisch verträglichere und leichter abbaubare Ölphasen gemacht worden. Die Anmelderin beschreibt in einer größeren Zahl von Schutzrechten mögliche Alternativen für die Ölphase, wobei auch Abmischungen solcher Austauschöle eingesetzt werden können. Beschrieben sind im einzelnen insbesondere ausgewählte oleophile Monocarbonsäureester, Polycarbonsäureester, wenigstens weitgehend wasserunlösliche und unter Arbeitsbedingungen fließfähige Alkohole, entsprechende Ether und ausgewählte Kohlensäureester. Summarisch wird hier verwiesen auf die folgenden Druckschriften: EP 0 374 671. EP 0 374 672, EP 0 386 638, EP 0 386 636, EP 0 382 070, EP 0 382 071, EP 0 391 252. EP 0 391 251, EP 0 532 570, EP 0 535 074.

Aber auch von dritter Seite sind eine Mehrzahl von Vorschlägen zu alternativen Ölphasen für das hier betroffene Arbeitsgebiet gemacht worden. So sind beispielsweise die folgenden Stoffklassen zum Austausch der Mineralölphase in W/O-Invertspülungen vorgeschlagen worden: Acetale, α-Olefine (LAO), Poly-α-Olefine (PAO). Interne Olefine (IO), (Oligo)amide, (Oligo)imide und (Oligo)ketone, siehe hierzu: EP 0 512 501, EP 0 627 481, GB 2 258 258, US 5,068,041, US 5,189,012 und WO 95/30643 und WO 95/32260.

Heute ist eine Mehrzahl konkreter alternativer Ölphasen für das erfindungsgemäß betroffene Arbeitsgebiet im praktischen Einsatz. Gleichwohl besteht nach wie vor das Bedürfnis zu einer besseren Abgleichung der drei entscheidenden Parameter für sinnvolles technisches Handeln: Optimiertes technologisches Arbeitsergebnis, optimierte Bewältigung des ökologischen Problembereiches und schließlich Optimierung des Kosten/NutzenVerhältnisses.

### Die Aufgabe der Erfindung und das Konzept ihrer technischen Lösung

Die Erfindung geht in ihrer breitesten Fassung von der Aufgabe aus, unter Beibehaltung und Nutzung des heute bestehenden umfangreichen technischen Fachwissens zum erfindungsgemäßen Sachgebiet eine neuartige Konzeption zu offenbaren, die die angestrebte Optimierung des Gesamtergebnisses ermöglicht. Hohe technische Leistungsfähigkeit soll in angemessenem Kosten/Nutzen-Verhältnis zugänglich werden und gleichzeitig eine optimierte Verwirklichung der heute bestehenden ökologischen Anforderungen ermöglichen. Diese Konzeption ist dabei als breites Arbeitsprinzip formuliert, das unter Einsatz des konkreten Fachwissens in nahezu beliebig vielen spezifischen Ausführungsformen variiert und damit dem jeweiligen Anwendungszweck optimiert angepaßt werden kann.

Die Lehre der Erfindung sieht als technische Lösung für diese breite Konzeption die Kombination der folgenden Arbeitselemente vor:
- Die Zusammensetzung des fließ- und pumpfähigen Wasser- und Öl-basierten Mehrkomponentengemisches stellt sicher, daß unter den konkreten Einsatzbedingungen, insbesondere im Bereich gefährdeter Gesteinsformationen innerhalb des Bohrlochs, die W/O-Invertspülung mit der dispersen wäßrigen Phase in der geschlossenen Ölphase ausgebildet ist.
- Außerhalb des Bereichs gefährdeter Gesteinsformationen und insbesondere im Rahmen der Aufarbeitung und Beseitigung der mit Spülungsresten überzogenen cuttings besteht die Möglichkeit zur Phasenumkehr unter Ausbildung des Wasser-basierten O/W-Emulsionszustandes.

Zugänglich wird damit die Kombination der nachfolgenden erwünschten Arbeitsergebnisse:
- Im Arbeitsbereich und insbesondere innerhalb gefährdeter Gesteinsformationen liegt das fließfähige Arbeitsmittel als W/O-Invert-Emulsion vor, die - in bekannter Weise - auf der Gesteinsoberfläche den erwünschten Verschluß im Sinne der Ausbildung einer semipermeablen Membran bildet. Die Bohrlochstabilität ist damit in heute optimaler Form zu verwirklichen.
- Durch das im nachfolgenden erläuterte Element der Erfindung einer gezielten Phasenumkehr zur O/W-Emulsion mit geschlossener wäßriger und disperser Ölphase erschließen sich jetzt aber gleichzeitig die der Fachwelt bekannten Erleichterungen bei der Aufarbeitung und Beseitigung der erbohrten und von der im Kreislauf geführten Spülungsphase abgetrennten cuttings. Die hier in dispergierter Form vorliegende Ölphase läßt sich zum wenigstens überwiegenden Anteil leicht von den cuttings abspülen, wobei - je nach Ökoverträglichkeit der Ölphase - ein getrennter Waschvorgang oder aber auch nur das einfache Dumping im Meerwasser bei off-shore-Bohrungen vorgesehen sein kann. Die disperse Ölphase schwimmt wenigstens anteilig in der Waschflüssigkeit auf und kann hier abgetrennt werden beziehungsweise ist dem erleichterten aeroben Abbau im Bereich der Seewasseroberfläche zugänglich.

Die erfindungsgemäße Lehre verwirklicht dabei dieses Prinzip der Phaseninversion durch Ausnutzung eines im Kreislaufverfahren der Bohrspülung vorgegebenen Arbeitsparameters, nämlich der Temperatur der Bohrspülung am jeweiligen Einsatzort. Innerhalb des Bohrloches sind mit zunehmender Bohrlochtiefe rasch ansteigende Temperaturen vorgegeben. Die mit den heißen cuttings beladene aufgeheizte Bohrspülflüssigphase verläßt den Bohrlochbereich ebenfalls noch mit stark angehobenen Temperaturen. Durch Steuerung und Einstellung vorbestimmter Phasenumkehrtemperaturen kann jetzt außerhalb des Bohrlochs die angestrebte Umkehr der W/O-Invertphase zur O/W-Emulsionsphase bewirkt werden. Einzelheiten dazu vergleiche im nachfolgenden. Durch den im Sinne der Erfindung ausgewählten und damit in der jeweiligen Spülung vorgegebenen Parameter der Phaseninversionstemperatur (PIT) ist sichergestellt, daß die im Kreislauf geführte Bohrspülflüssigkeit im Bohrvorgang vor Ort den hier erwünschten Zustand der W/O-Invertemulsion aufweist.

### Zum naturwissenschaftlichen Hintergrund des erfindungsgemäßen Handelns

Zur Homogenisierung nicht mischbarer Öl/Wasser-Phasen durch Emulgierung werden bekanntlich Emulgatoren beziehungsweise Emulgatorsysteme eingesetzt. Dabei gilt das Allgemeinwissen: Emulgatoren sind Verbindungen, die in ihrer Molekülstruktur hydrophile und lipophile Bausteine miteinander verbinden. Auswahl und Ausmaß der jeweiligen Bausteine im betroffenen Emulgatormolekül beziehungsweise Emulgatorsystem werden häufig durch den HLB-(number)Wert gekennzeichnet, der eine Aussage zur Hydrophilic-Lipophilic-Balance macht. Dabei gilt üblicherweise:

Emulgatoren beziehungsweise Emulgatorsysteme mit vergleichsweise stark hydrophilen Anteilen führen zu hohen HLB-Werten und in ihrer praktischen Anwendung in der Regel zu den Wasser-basierten O/W-Emulsionen mit disperser Ölphase. Emulgatoren beziehungsweise Emulgatorsysteme mit vergleichsweise stark lipophilen Anteilen führen zu vergleichsweise niedrigeren HLB-Werten und damit zur W/O-Invertemulsion mit geschlossener Ölphase und disperser Wasserphase.

Diese Darstellung ist allerdings stark vereinfacht:

Durch eine Mehrzahl von Begleitfaktoren im Gesamtgemisch kann die Wirkung der eingesetzten Emulgatoren beziehungsweise Emulgatorsysteme beeinflußt und damit verändert werden. Als bekannte Parameter für diese Modifikationen sind im erfindungsgemäßen Sachzusammenhang insbesondere zu nennen: die Beladung der wäßrigen Phase mit löslichen organischen und/oder anorganischen Komponenten, z.B. wasserlöslichen, insbesondere mehrwertigen niederen Alkoholen und/oder deren Oligomeren, löslichen anorganischen und/oder organischen Salzen, das Mengenverhältnis von Emulgator/Emulgatorsystem zur Ölmenge und schließlich eine Konstitutions-Abstimmung in dem Aufbau des Emulgators/Emulgatorsystems einerseits und der Molekülstruktur der Ölphase andererseits.

Ein im Sinne der erfindungsgemäßen Lehre besonders bedeutungsvoller Parameter für die im konkreten Fall gegebene Emulgatorwirkung-bezüglich der Ausbildung des O/W- oder des W/O-Emulsionszustandes kann die jeweilige Temperatur des Mehrkomponentensystems sein. Insbesondere wenigstens anteilig nichtionische Emulgatoren/Emulgatorsysteme zeigen diesen Effekt der ausgeprägten Temperaturabhängigkeit in Abmischungen von nicht ineinander löslichen Öl- und Wasserphasen.

Der zuvor bereits erwähnte System-Parameter der Phaseninversionstemperatur (PIT) bekommt damit eine entscheidende Bedeutung: Im Zusammenwirken mit den weiteren zuvor genannten Parametern des Systems führen die eingesetzten Emulgatoren/Emulgatorsysteme zu den folgenden Emulsionszuordnungen:

Systemtemperaturen unterhalb der PIT bilden den O/W-Emulsionszustand aus, Systemtemperaturen oberhalb PIT bilden die W/O-Invertemulsion. Durch Temperaturverschiebung in den jeweils anderen Temperaturbereich wird die Phaseninversion des Systems bewirkt.

Hiervon macht die erfindungsgemäße Lehre sinnvollen Gebrauch und benutzt damit die naturgegebene Variation dieses Arbeitsparameters:

Im heißen Inneren der Gesteinserbohrung ist - durch Wahl geeigneter Emulgatoren/Emulgatorsysteme in Abstimmung mit den weiteren hier zu berücksichtigenden Variablen - der W/O-Invertzustand mit geschlossener Ölphase gewährleistet. Im vergleichsweise kalten Außenbereich kann durch Temperaturabsenkung unter die PIT des Systems die Phasenumkehr der Spülung und damit die erleichterte Aufarbeitung abzutrennender Anteile in einfacher Weise verwirklicht werden. Die mit der Kreislaufführung der Spülung im Erdinneren stets verbundene Aufheizung stellt den gewünschten hohen Temperaturbereich oberhalb der PIT des Systems an der heißen Gesteinsoberfläche und damit deren Inertisierung gegen den dispersen Wasseranteil der Bohrspülung an diesem Ort sicher.

Bevor auf die Einzelheiten der erfindungsgemäßen technischen Lehre eingegangen wird, seien zusammenfassend hier wesentliche einschlägige Literatur und Fachwissen zum Phänomen der temperaturabhängigen Phaseninversion und des zugehörigen Parameters PIT zitiert. Im Licht dieses der Allgemeinheit zugänglichen Grundwissens erschließt sich das Verständnis und die Möglichkeit zur Verwirklichung der erfindungsgemäßen Lehre.

Eine sehr sorgfältige Darstellung der Phasengleichgewichte von 3-Komponenten-Systemen aus wäßriger Phase/Ölphase/Surfactant (insbesondere nichtionische Emulgatoren/Emulgatorsysteme) findet sich in der Veröffentlichung K. SHINODA und H. KUNIEDA "Phase Properties of Emulsions: PIT and HLB" in "Encyclopedia of Emulsion Technology. 1983, Vol.1, 337 bis 367. Die Verfasser beziehen in ihre Veröffentlichung insbesondere auch den einschlägigen umfangreichen druckschriftlichen Stand der Technik ein, wobei zum Verständnis der im nachfolgenden gegebenen erfindungsgemäßen Lehre insbesondere das Wissen zur Temperaturabhängigkeit der Phaseninversion solcher Emulgatoren enthaltenden Öl/Wasser-Systeme von Bedeutung ist. Die zitierte Veröffentlichung SHINODA et al. geht auf diesen Temperaturparameter und die durch seine Variation ausgelösten Effekte im Mehrphasensystem ausführlich ein. Dabei wird insbesondere aber auch Bezug genommen auf das frühere Fachwissen, vgl. beispielsweise aus der Referenzen-Liste (a.a.O. Seiten 366/367) die älteren Veröffentlichungen von K. SHINODA und Mitarbeitern gem. Ref. 7 bis 10. SHINODA beschreibt hier den Parameter der Phaseninversionstemperatur (PIT, HLB-Temperature). wobei der Effekt der Temperaturabhängigkeit des jeweiligen Systems unter Einsatz von nichtionischen Emulgatoren besonders herausgestellt ist in den älteren Veröffentlichungen von SHINODA et al. gem. Ref. 7 und 8. Dargestellt sind für fließfähige Stoffgemische auf Basis der 3-Komponenten-Systeme Öl/Wasser/-Emulgator insbesondere die Abhängigkeit der sich jeweils einstellenden Phasengleichgewichtszustände von der Temperatur des Mehrkomponentensystems. Der im vergleichsweise niedrigeren Temperaturbereich stabile Zustand der O/W-Emulsion mit einer dispersen Ölphase in der geschlossenen Wasserphase geht bei Temperatursteigerung in den Bereich der Phaseninversion - PIT bzw. Bereich der "Mittelphase" - über. Bei weiterer Temperatursteigerung invertiert das Mehrkomponentensystem zum stabilen W/O-Invertzustand, in dem in der geschlossenen Ölphase die Wasserphase jetzt dispergiert vorliegt.

SHINODA verweist in seiner Referenzen-Liste - a.a.O. Ref. 31 und 32 - auf ältere Arbeiten von P.A. WINSOR. Im Text seiner zuvor zitierten Veröffentlichung (Seiten 344 bis 345) werden die von WINSOR geprägten Phasengleichgewichtsbezeichnungen WINSOR I, WINSOR III und WINSOR II zu den temperaturabhängigen stabilen Phasenbereichen O/W-Mittelphase-W/O in Beziehung gesetzt: WINSOR I ist der Bereich der stabilen wasserbasierten O/W-Phase, WINSOR II entspricht dem Bereich der stabilen Invertphase vom Typ W/O, WINSOR III bezeichnet die Mittelphase und entspricht damit dem Temperaturbereich der Phaseninversion PIT im Sinne des heutigen Sprachgebrauchs und der erfindungsgemäßen Lehre.

Die Bestimmung dieser zuletzt genannten unterschiedlichen Phasenbereiche und insbesondere gerade auch die Bestimmung der im jeweiligen System gegebenen (Mikroemulsions-)Mittelphase (WINSOR III) ist in zweifacher Weise möglich, wobei diese beiden Möglichkeiten zweckmäßigerweise miteinander verbunden werden:
a) Bestimmung der Temperaturabhängigkeit und die damit verbundene Phasenverschiebung durch experimentelles Ausprüfen des jeweiligen Systems, insbesondere mittels Leitfähigkeitsbestimmung.
b) Vorab besteht aufgrund des heutigen Fachwissens die Möglichkeit zur rechnerischen Ermittlung der PIT des jeweils betroffenen Systems.

Grundsätzlich gilt zunächst einmal das Folgende: Das Phänomen der Phaseninversion und der zugehörigen Phaseninversionstemperatur (PIT) findet innerhalb eines Temperaturbereiches statt, der seinerseits mit einer Untergrenze sich gegen den O/W-Emulsionszustand und mit seiner Obergrenze gegen den W/O-Invertemulsionszustand abgrenzt. Die experimentelle Ausprüfung des jeweiligen Systems, insbesondere durch Leitfähigkeitsbestimmung bei ansteigender und/oder abfallender Temperatur, gibt Maßzahlen für die jeweilige PIT-Untergrenze und PIT-Obergrenze, wobei hier nochmals leichte Verschiebungen vorliegen können, wenn die Leitfähigkeitsprüfung einmal in aufsteigendem Temperaturast und zum anderen im abfallenden Temperaturast bestimmt werden. Die Phaseninversionstemperatur (PIT) oder besser gesagt der PIT-Bereich zeigt insoweit Übereinstimmung mit der Definition der zuvor erläuterten WINSOR III-(Mikroemulsions-)Mittelphase. Dabei gilt jedoch:

Der Abstand zwischen der PIT-Untergrenze (Abgrenzung gegen O/W-) und der PIT-Obergrenze (Abgrenzung gegen W/O-Invert-) ist in aller Regel ein steuerbarer und durch Wahl geeigneter Emulgatorkomponenten bzw. -systeme vergleichsweise beschränkter Temperaturbereich. Häufig sind hier Temperaturbereiche gegeben, die als Differenzwert weniger als 20 bis 30°C, insbesondere nicht mehr als 10 bis 15°C, ergeben. Die erfindungsgemäße Lehre kann davon Gebrauch machen, wenn sie die eindeutige Umwandlung der Invertspülung - oder abgetrennter Anteile davon - in den O/W-Emulsionszustand vollziehen will. Für bestimmte im nachfolgenden noch geschilderte Ausführungsformen kann es aber dadurchaus interessant sein, mit vergleichsweise breiten Temperaturbereichen für die Phaseninversion zu arbeiten, solange sichergestellt ist, daß im Arbeitstemperaturbereich beim Einsatz der Bohrspülung im Erdinneren die Obergrenze dieses PIT-Bereiches - Einstellung des W/O-Invertzustandes- nicht nur erreicht, sondern bevorzugt hinreichend überschritten ist.

Die rechnerische Ermittlung der PIT des jeweils betroffenen Systems gemäß b) führt demgegenüber nicht zur exakten Bestimmung der zuvor erwähnten Temperaturgrenzwerte des jeweiligen PIT-Bereiches, sondern zu einem Zahlenwert, der in der Größenordnung des in der Praxis dann tatsächlich auftretenden PIT-Bereiches liegt. Damit wird verständlich, daß die Kombination der Ermittlungen zur Phasenverschiebung gemäß a) und b) für die Praxis zweckmäßig sein kann. Hier gilt dann im einzelnen:

Die experimentelle Bestimmung der Leitfähigkeit des Systems zeigt im Bereich der Wasser-basierten O/W-Spülung optimale Leitfähigkeit, im Bereich der W/O-Invertphase ist in der Regel keine Leitfähigkeit gegeben. Wird an einer Emulsionsprobe im Bereich der Phaseninversionstemperatur die Leitfähigkeit unter Temperaturvariation (ansteigend und/oder abfallend) gemessen, dann sind hier in sehr genauer Weise die Grenztemperaturen zwischen den genannten drei Bereichen O/W-Mittelphase-W/O zahlenmäßig zu ermitteln. Zur Leitfähigkeit beziehungsweise nicht mehr bestehenden Leitfähigkeit der beiden Grenzbereiche gilt das zuvor Gesagte, zwischen diesen beiden Bereichen liegt der Temperaturabschnitt der hier eintretenden Phaseninversion des jeweiligen Systems, der mit seinen Temperaturgrenzen nach unten (Leitfähigkeit gegeben) und nach oben (keine Leitfähigkeit) exakt zu ermitteln ist.

Diese experimentelle Bestimmung des Temperaturbereiches zur Phaseninversion durch Leitfähigkeitsmessungen ist in dem hier einschlägigen druckschriftlichen Stand der Technik ausführlich beschrieben. Insoweit kann darauf Bezug genommen werden. Verwiesen wird beispielsweise auf die Offenbarung der EP 0 354 586 und EP 0 521 981. Die unter den Phaseninversions-Temperaturbereich abgekühlten O/W-Emulsionen zeigen bei der Leitfähigkeitsbestimmung eine elektrische Leitfähigkeit von über 1 mSiemens pro cm (mS/cm). Durch langsames Erwärmen unter vorgegebenen Programmbedingungen wird ein Leitfähigkeitsdiagramm erstellt. Der Temperaturbereich, innerhalb dessen die Leitfähigkeit auf Werte unterhalb 0,1 mS/cm abfällt, wird als Phaseninversions-Temperaturbereich notiert. Für die Zwecke der erfindungsgemäßen Lehre ist es zweckmäßig ein entsprechendes Leitfähigkeitsdiagramm auch auf dem abfallenden Temperaturast zu erstellen, bei dem die Leitfähigkeit an einem Mehrkomponentengemisch ermittelt wird, das zunächst auf Temperaturen oberhalb des Phaseninversions-Temperaturbereichs erhitzt worden ist und dann in vorbestimmter Weise gekühlt wird. Die hier bestimmten oberen und unteren Grenzwerte für den Phaseninversions-Temperaturbereich müssen nicht voll identisch sein mit den entsprechenden Werten des zuvor geschilderten Bestimmungsabschnittes mit ansteigender Temperatur des Mehrkomponentengemisches. In der Regel sind allerdings die jeweiligen Grenzwerte doch so dicht beieinander gelagert, daß für das großtechnische Arbeiten mit vereinheitlichten Maßzahlen - insbesondere durch Mittelwertbildung der jeweils zueinander gehörigen Grenzwerte - gearbeitet werden kann. Aber auch für den Fall, daß hier stärkere Differenzierungen der Grenzwerte des Phaseninversions-Temperaturbereiches einmal bei der Bestimmung in ansteigender Temperatur und zum anderen in der Bestimmung bei abfallender Temperatur gemessen werden, ist die Durchführbarkeit der im nachfolgenden im einzelnen geschilderten technischen Lehre aus den hier eingesetzten Arbeitsprinzipien sichergestellt. Das Mehrkomponentensystem -ist in seinen Arbeits- und Wirkungsparametern so aufeinander abzustimmen, daß sich die Einstellung des zuvor geschilderten erfindungsgemäßen Arbeitsprinzips verwirklichen läßt: Im heißen Inneren der Gesteinserbohrung ist der W/O-Invertzustand mit geschlossener Ölphase gewährleistet. Im vergleichsweise kalten Außenbereich kann durch Temperaturabsenkung unter die PIT des Systems die Phasenumkehr der Spülung und damit die erleichterte Aufarbeitung abzutrennender Anteile in einfacher Weise verwirklicht werden.

Zur Minderung des experimentellen Arbeitsaufwandes kann die rechnerische Ermittlung der PIT des jeweils betroffenen Mehrkomponentensystems zweckmäßig sein. Insbesondere gilt das aber auch für potentielle Optimierungen in der Auswahl der Emulgatoren beziehungsweise Emulgatorsysteme und ihrer Anpassung an die durch sonstige Überlegungen zum technischen Handeln vorgegebene Auswahl und Abmischung von wäßriger Phase einerseits und Typ der Ölphase andererseits. Einschlägiges Fachwissen ist gerade in jüngster Zeit aus an sich ganz anderen Bereichen, insbesondere aus dem Bereich der Kosmetika-Herstellung, entwickelt worden. Die Erfindung sieht hier den Einsatz dieses allgemein gültigen Fachwissens jetzt auch und gerade für das erfindungsgemäß betroffene Arbeitsgebiet der Erbohrung von Erdreich beziehungsweise der Behandlung von bereits bestehenden Erdreichbohrungen mit optimierten Öl- und Wasser-Phasen enthaltenden Systemen vor.

Verwiesen wird in diesem Sachzusammenhang insbesondere auf die Veröffentlichung TH.FÖRSTER, W.VON RYBINSKI, H.TESMANN und A.WADLE "Calculation of optimum emulsifier mixtures for phase inversion emulsification", in International Journal of Cosmetic Science 16, 84-92 (1994). Dargestellt ist hier im einzelnen wie auf rechnerischem Weg für vorgegebene 3-Komponenten-Systeme aus einer Ölphase, einer Wasserphase und einem Emulgator auf der Basis des für die Ölphase charakteristischen EACN-Wertes (equivalent alkane carbon number) der Temperaturbereich der Phaseninversion (PIT) über die CAPICO-Methode (calculation of phase inversion in concentrates) errechnet werden kann. Diese Veröffentlichung FÖRSTER et al. bezieht insbesondere wiederum wesentliche Literatur für den hier angeschnittenen Themenkomplex an, vgl. die Referenz-Liste a.a.O. Seiten 91 und 92, die im Zusammenhang mit der Offenbarung dieser Veröffentlichung FÖRSTER et al.-zu sehen ist. Im einzelnen wird dann anhand zahlreicher Beispiele dargestellt, wie mittels der CAPICO-Methode im Rahmen des EACN-Konzepts die Auswahl und Optimierung der Emulgatoren/Emulgatorsysteme zur optimalen Einstellung vorgegebener Werte für den Temperaturbereich der Phaseninversion zugänglich wird.

Basierend auf diesen Grundkenntnissen wird es möglich, für die jeweils zum praktischen Einsatz beabsichtigten Komponenten - insbesondere die Ölphase und zugehörige Emulgatoren/Emulgatorsysteme nach Art und Menge - vorab Mischungen und Mischungsverhältnisse zu bestimmen, deren PIT in dem erfindungsgemäß angestrebten Temperaturbereich liegt. Hieraus ergibt sich ein erster sinnvoller Ansatz zur Durchführung experimenteller Arbeiten im Sinne der Ermittlungsmethode zu a). Über die rechnerische Ermittlung der PIT hinausgehend kann insbesondere der Bereich der Bildung der Mittelphase mit ihrer Temperaturuntergrenze und insbesondere ihrer Temperaturobergrenze bestimmt werden. Völlig eindeutig sind damit die Temperaturgrenzwerte festgelegt oberhalb deren der W/O-Invertbereich für die Spülung im unmittelbaren Kontakt mit der heißen Wandinnenfläche des Bohrloches für die Ausbildung der geschlossenen semipermeablen Membran liegt. In der Regel wird es dabei zweckmäßig sein - siehe dazu die nachfolgenden Erläuterungen der erfindungsgemäßen Lehre - diese obere Temperaturgrenze des Bereichs der Phaseninversion im praktischen Einsatz mit einem hinreichenden Sicherheitsabstand auszuwählen und zu gewährleisten, um die im Heißbereich geforderte W/O-Invertphase sicherzustellen.

Auf der anderen Seite soll im niederen Temperaturbereich die Unterschreitung des W/0-Invertzustandes in solchem Ausmaß möglich sein, daß von den Vorteilen der Phasenumkehr bis hin zur O/W-Phase und der damit in der Regel verbundenen erleichterten Aufarbeitung abgetrennter Anteile der Bohrspülung Gebrauch gemacht werden kann.

Zur Vervollständigung der Angaben zum einschlägigen Fachwissen sei auf folgendes verwiesen: In jüngerer Vergangenheit ist ein beträchtlicher Forschungsaufwand zur Verbesserung der sogenannten tertiären Erdölförderung durch Fluten ölhaltiger Erdreichschichten mit Emulgatoren/Emulgatorsysteme enthaltenden Emulsionen vom O/W-Typ betrieben worden. Das hier angestrebte Ziel sieht insbesondere vor, entsprechende Systeme im Bereich der Emulsionsmittelphase (WINSOR III) innerhalb der Formation zum Einsatz zu bringen. Verständlich ist das sofort aus der von der erfindungsgemäßen Lehre abweichenden entgegengesetzten Zielvorstellung: Die Optimierung des Gleichgewichtes O/W-W/O unter Ausbildung der Mikroemulsionsphase im Mehrkomponentensystem führt zur Steigerung der Wirksamkeit des im Fluten geforderten Waschprozesses und damit zur Steigerung des Auswaschens der Ölphase aus der Gesteinsformation. Entscheidend ist hier, daß aufgrund des Mikroemulsionszustandes die unerwünschte Verstopfung des Porenvolumens im Gestein durch größere Öltröpfchen mit Sicherheit verhindert werden kann.

Die Zielvorstellung der Erfindung ist diesem Arbeitsschritt der tertiären Erdölförderung durch Fluten entgegengesetzt:

Die erfindungsgemäße Lehre will - im Sinne des bekannten Arbeitens mit W/O-Invertemulsionen- das gezielte Verschließen der Porenoberfläche der Gesteinsformation im Bohrloch durch die geschlossene Ölschicht. Gleichzeitig soll aber außerhalb des Bohrloches durch Phasenumkehr die erleichterte Entsorgung der Bohrspülung beziehungsweise von Anteilen der Bohrspülung erreicht werden.

### Der Gegenstand der Erfindung

Erfindungsgegenstand ist dementsprechend in einer ersten Ausführungsform.

### Geänderte Beschreibungsseite 15 :

Die Verwendung von Emulgatoren beziehungsweise Emulgatorsystemen, die im jeweils betroffenen Mehrkomponentengemisch zur temperaturgesteuerten Phaseninversion bei einer Phaseninversionstemperatur (PIT) innerhalb eines Temperaturbereiches führen, dessen Obergrenze soweit unterhalb der Arbeitstemperatur des Mehrkomponentengemisches im Bereich des geologischen Aufschlusses liegt, daß hier der Wasser-basierte Anteil des Mehrkomponentengemisches als disperse (Invert-)Phase in der geschlossenen Ölphase (W/O-Invertemulsion) vorliegt, während die Untergrenze dieses Temperaturbereiches die Umwandlung des Mehrkomponentengemisches zur O/W-Emulsion mit geschlossener wäßriger Phase ermöglicht.

Bevorzugt liegt hier die PIT des Mehrkomponentengemisches in einem Temperaturbereich oberhalb der Erstarrung seiner wäßrigen Phase als Untergrenze und dabei insbesondere im Bereich bis 100°C als Obergrenze. Weiterhin bevorzugte Mehrkomponentengemische sind auch schon im Bereich der Raumtemperatur fließ- und pumpfähig.

Eine besonders wichtige Ausführungsform der Erfindung betrifft die Verwendung solcher Mehrkomponentensysteme im Rahmen des Einsatzes von W/O-Invertbohrspülungen (Bohrschlämme) aus dem Bereich der Erdreich-Erbohrung zur Einschränkung der erforderlichen Menge an Ölphase bei gleichzeitiger Sicherstellung der W/O-Invertemulgierung, sowie der Inertisierung der wasserhaltigen Bohrspülung im direkten Kontakt mit den Wandflächen des Bohrloches und der erbohrten cuttings im hohen Temperaturbereich, sowie zur erleichterten Entsorgung der mit Bohrschlamm beladenen cuttings durch Phaseninversion des Schlammes im niederen Temperaturbereich.

Die Erfindung betrifft weiterhin in einer wichtigen Ausführungsform die Verwendung von Emulgatoren beziehungsweise Emulgatorsystemen mit einer temperaturgesteuerten Phaseninversion (PIT), insbesondere im Bereich von 0 bis 100°C, zur temperaturabhängigen Ausbildung von O/W- beziehungsweise W/O-Emulsionen aus Wasser- und Öl-basierten Flüssigphasen im Rahmen der Herstellung und des Einsatzes fließ- und pumpfähiger, gegebenenfalls mit feinteiligen Feststoffen beladener Emulsionen, insbesondere Bohrspülungen, für die Erbohrung von Erdreich und/oder für die weiterführende Behandlung solcher Erdreichbohrungen. Bei Temperaturen unterhalb der PIT ist hier die wasserbasierte O/W-Emulgierung und bei Temperaturen oberhalb PIT die Ausbildung der W/O-Invertemulgierung vorherbestimmbar und einstellbar. Geeignet sind dazu insbesondere Emulgatoren beziehungsweise Emulgatorsysteme, die wenigstens anteilsweise und vorzugsweise zum wenigstens überwiegenden Anteil nichtionischer Struktur sind und/oder sowohl nichtionische Strukturelemente als auch anionische Strukturelemente in der Molekülgrundstruktur der Emulgatoren/Emulgatorsysteme miteinander verbinden.

### Weitere Einzelheiten zur erfindungsgemäßen Lehre

Wenn die Verwirklichung des erfindungsgemäßen Arbeitsprinzips auch nicht zwingend an den Einsatz von Emulgatoren beziehungsweise Emulgatorsystemen nichtionischer Struktur gebunden ist, so wird im nachfolgenden gleichwohl die Darstellung allgemeiner und bevorzugter Ausführungsformen der erfindungsgemäßen Lehre vor allem unter Einsatz solcher nichtionischen Emulgatoren/Emulgatorsysteme erläutert. Auch für die praktische Verwirklichung des erfindungsgemäßen Prinzips bietet sich diese Emulgatorenklasse besonders an. Der Einfluß einer Salzbeladung der wäßrigen Phase mit insbesondere Salzen mehrwertiger Kationen auf die emulgierende Wirkung dieser Stoffklasse ist vergleichsweise gering. Die Mitverwendung gerade solcher Salzbeladenen wäßrigen Phasen in der Invertspülung kann aber für die Regulierung des Gleichgewichts der osmotischen Drucke zwischen der Bohrspülung einerseits und der Flüssigphase im umgebenden Gestein andererseits von wichtiger praktischer Bedeutung sein. Nichtionische Emulgatoren/-Emulgatorsysteme können für bevorzugte Ausführungsformen der erfindungsgemäßen Lehre als fließfähige Komponenten auch schon bei Raumtemperatur oder nur schwach erhöhten Temperaturen zur Verwendung kommen. Der Bereich geeigneter nichtionischer Emulgatoren ist so breit gestreut und dabei aus Chemikalien sowohl natürlichen als auch synthetischen Ursprungs zugänglich, daß optimierte Emulgatorsysteme aus dem Gesichtspunkt der Ökoverträglichkeit und insbesondere auch der gegebenenfalls zu berücksichtigenden marinen Toxizität eingesetzt werden können. Gleichzeitig sind die hier wesentlichen Komponenten kostengünstig zugänglich. Entscheidend ist aber für diese erfindungsgemäß bevorzugte Auswahl nichtionischer Emulgatorkomponenten ihre ausgeprägte Temperaturabhängigkeit der PIT im jeweiligen Ölsystem, die zusätzlich durch die Mengenverhältnisse in der Abmischung der Ölphase zu den Emulgatoren/Emulgatorkomponenten entscheidend gesteuert werden kann - siehe die zuvor zitierte Literaturstelle Förster et al.

In bevorzugten Ausführungsformen der erfindungsgemäßen Lehre werden dabei die Emulgatoren/Emulgatorsysteme so auf die weiteren im jeweiligen Fall konkret gegebenen Parameter in der Spülungszusammensetzung abgestimmt, daß die PIT des Mehrkomponentengemisches in einem Temperaturbereich liegt, der als Untergrenze die Erstarrung der wäßrigen Phase des Mehrkomponentengemisches definiert. Wie zuvor schon kurz angesprochen, liegt üblicherweise in Spülungssystemen der hier betroffenen Art eine wäßrige Phase vor, die beträchtliche Mengen an gelösten organischen und/oder anorganischen Hilfsstoffen, z.B. an löslichen Salzen zur Einstellung und Regulierung des Druckausgleiches der miteinander konkurierenden Wasserphasen und ihrer osmotischen Drucke einerseits im umgebenden Gestein der Erdreichbohrung und andererseits in der Bohrspülung enthalten kann. Die Erstarrungstemperaturen solcher beispielsweise Salz-beladener wäßriger Phasen kann deutlich unterhalb 0°C - beispielsweise im Bereich von -10 bis -20°C - liegen. Eine bevorzugte Untergrenze für die PIT - beziehungsweise den PIT-Bereich - des Mehrkomponentengemisches liegt allerdings bei etwa 0°C, so daß weiterhin bevorzugte Zahlenbereiche für diese Temperaturuntergrenze der PIT entsprechende Werte oberhalb 0 bis 5°C und insbesondere Werte im Bereich von 10 bis 15 oder auch 20°C sind. Im nachfolgenden wird auf die praktische Bedeutung dieser vergleichsweise niedrig liegenden Grenzwerte für die Bestimmung des PIT-Bereiches nach unten im Zusammenhang mit bevorzugten konkreten Ausführungsformen für das erfindungsgemäße Handeln noch eingegangen.

Zur Bestimmung der erfindungsgemäß einzustellenden Obergrenze des Temperaturbereichs, innerhalb dessen die Phaseninversion bei Abkühlung stattfindet, gelten die nachfolgenden allgemeinen und bevorzugten Angaben:

### Geänderte Beschreibungsseite 18 :

Die Obergrenze des Temperaturbereiches zur Auslösung der Phaseninversion soll einen hinreichenden Abstand zum Bereich der stabilen W/O-Invertemulsion aufweisen. Zweckmäßigerweise liegt damit die Obergrenze des angesprochenen Temperaturbereiches zur Phaseninversion wenigstens 3 bis 5°C unterhalb der Arbeitstemperatur des Mehrkomponentengemisches im Bereich des geologischen Aufschlusses. Bevorzugt sind hier allerdings stärker ausgeprägte Abstände zwischen diesen beiden Temperaturparametern. So kann es in bevorzugten Ausführungsformen zweckmäßig sein einen Temperaturabstand der hier gegeneinander gestellten Parameter von wenigstens 10 bis 15°C und insbesondere von wenigstens 20 bis 30°C einzustellen. Für die Praxis werden damit keine besonderen Schwierigkeiten ausgelöst. Im heißen Erdreich werden ja vergleichsweise rasch Temperaturbereiche von 100°C und deutlich darüber erreicht.

Es ist damit in der Regel bevorzugt, die Obergrenze für die Definition und Bestimmung der PIT beziehungsweise des PIT-Bereiches im Sinne des erfindungsgemäßen Handelns bei maximal 100°C oder nur beschränkt höheren Temperaturen - beispielsweise bei maximal 110 bis 120°C - festzulegen. In bevorzugten Ausführungsformen liegt die Obergrenze für die Auswahl und Einstellung der PIT bei Temperaturen unter 100°C, z.B. bei maximal etwa 80 bis 90°C, vorzugsweise bei maximal 60°C und insbesondere im Temperaturbereich bis maximal 50°C. Hieraus leitet sich für das erfindungsgemäße Handeln ab, daß Mehrkomponentengemische der angegebenen Art besonders bevorzugt sein können, deren PIT innerhalb des Temperaturbereiches von etwa 5 bis 80°C, vorzugsweise im Bereich von etwa 10 bis 60°C und insbesondere im Temperaturbereich von 15 bis 50°C, liegt. In der im nachfolgenden näher konkretisierten Ausgestaltung der Erfindung in einer besonders bevorzugten Ausführungsform können Zahlenwerte für die PIT im Temperaturbereich von 20 bis 35°C oder auch bis 40°C besonders sinnvoll sein. Verständlich wird das anhand der nachfolgenden Überlegungen:

Der Einsatz von Mehrkomponentengemischen, in denen die erfindungsgemäßen Emulgatoren oder Emulgatorensysteme verwendet werden, beispielsweise im Rahmen der Erdreichbohrung als fließ-und pumpfähige Bohrspülflüssigkeit, sieht die kontinuierliche Kreislaufführung dieser Flüssigphase in das Erdreich nach unten und von dort - beladen mit den erbohrten cuttings

### Geänderte Beschreibungsseite 19 :

- nach oben zurück zur Bohrplattform vor. Hier auf der Bohrplattform werden die erbohrten cuttings - üblicherweise durch Sieben - abgetrennt und die zurückgewonnene fließ- und pumpfähige Flüssigphase in einen Vorratsbehälter gegeben, von dem aus die Invertspülung erneut nach unten in das Bohrloch gepumpt wird. Innerhalb dieses Kreislaufes durchläuft die Bohrspülung ein beträchtliches Temperaturgefälle, auch wenn die mit cuttings beladene Spülung noch heiß nach oben gefördert wird. Die technischen Stufen der Absiebung und der Zwischenlagerung der Spülungsphase im Vorratsbehälter führen in der Regel zu einem Absinken ihrer Eigentemperatur beispielsweise auf Werte im Bereich von etwa 40 bis 60°C.

Durch Anpassung der Phaseninversion beziehungsweise der PIT an diese Gegebenheiten tritt die Phaseninversion in der im Kreislauf geführten Spülung auch in den vergleichsweise kühleren Bereichen außerhalb des Erdreiches nicht auf. Wird die PIT (der PIT-Bereich) des Systems hinreichend unterhalb eines vorgegebenen Grenzwertes von beispielsweise 50°C vorgegeben und eingehalten, dann läßt sich diese Zielvorstellung mit einfachen Mitteln verwirklichen. Selbst in kalten Jahreszeiten können im Spülungskreislauf - beispielsweise durch entsprechende Heizelemente im Vorratsbehälter - solche unteren Grenzwerte für die sich im Kreislauf einstellende Temperatur der umgepumpten Invertschlammphase aufrechterhalten werden. Durch weiterführende Temperaturabsenkung wird der PIT-Bereich nach unten erreicht und gewünschtenfalls unterschritten, so daß sich zunächst in den den cuttings anhaftenden Spülungsanteilen die Mikroemulsionsmittelphase und bei weiterer Temperaturabsenkung die Wasser-basierte O/W-Emulsionsphase einstellen. Es leuchtet sofort ein, daß damit die Entsorgung des den cuttings anhaftenden Restöles substantiell vereinfacht werden kann.

So kann es beispielsweise im Bereich der Bohrschlämme für die landgestützte und/oder bevorzugt off-shore-Erbohrung von Erdreich zweckmäßig sein, Bohrschlämme mit einer PIT im Temperaturbereich gleich/kleiner 50°C und beispielsweise mit einer PIT im Bereich von 20 bis 35°C einzusetzen. Hier erschließt sich die Möglichkeit, einerseits den Spülungskreislauf ohne Phasenumkehr und damit kontinuierlich im Bereich des W/O-Invertschlammes zu erhalten. Die abgetrennten cuttings können jetzt aber in vereinfachter Weise - insbesondere vor Ort - einer Reinigungsstufe unterworfen oder aber auch durch unmittelbares Dumping entsorgt werden. Unter Einsatz des allgemeinen Fachwissens kann die jeweils optimale konkrete Ausführungsform für diesen Entsorgungsschritt gefunden werden. Lediglich beispielhaft gilt hier:

Werden die mit erfindungsgemäß ausgestalteten Bohrspülungen beladenen cuttings durch einfaches Dumping unmittelbar in das umgebende Meerwasser bei off-shore-Bohrungen gegeben, so stellt sich durch Abkühlung im Meerwasser rasch die temperaturgesteuerte Inversionsphase (Emulsionsmittelphase) und nachfolgend der O/W-Emulsionszustand in diesen Spülungsresten ein. Die Verdünnungswirkung des umgebenden Seewassers kann sich voll auswirken, die gebildeten Öltröpfchen haften nicht mehr dem Gestein an und sind damit beweglich. Wenigstens anteilsweise schwimmen sie im Seewasser nach oben auf, erreichen dort den Bereich vergleichsweise erhöhter Sauerstoffkonzentrationen in der wäßrigen Phase und unterliegen dort dann dem vergleichsweise erleichterten aeroben Abbau.

Ebenso kann aber wenigstens eine Teilreinigung der zu entsorgenden cuttings von der Ölphase durch einen getrennten Arbeitsschritt - bevorzugt vor Ort - vorgenommen werden: Beim Einstellen des Temperaturbereiches für die Inversions-Mittelphase ist die in dem Stand der Technik im Rahmen der tertiären Erdölförderung angestrebte besonders leichte Auswaschbarkeit der Ölphase gegeben, so daß ein entsprechender Waschprozeß ohne unzumutbaren Arbeitsaufwand mit Wasser-basierten Waschflüssigkeiten - z.B. ganz einfach Meerwasser - vorgenommen werden kann. Durch weiterführende Temperaturabsenkung wird der Bereich der O/W-Emulsionsbildung eingestellt. Damit kann eine Auftrennung einerseits in die wäßrige Phase und die Ölphase als potentieller Arbeitsschritt einer solchen Reinigungsstufe unschwer verwirklicht werden.

Unter Berücksichtigung dieser Überlegung wird verständlich, daß erfindungsgemäß bevorzugte Bohrschlämme für die landgestützte und/oder bevorzugt für die off-shore-Erbohrung von Erdreich, insbesondere zur Erschließung von Öl- und/oder Gasvorkommen, so ausgebildet sein können, daß die Bohrschlämme mit einer PIT im Temperaturbereich gleich/kleiner 50°C, vorzugsweise gleich/kleiner 40°C und insbesondere im Bereich von 20 bis 35°C ausgebildet sind. Die PIT des Gesamtsystems kann insbesondere derart auf die Einsatzbedingungen des Bohrschlammes abgestimmt sein, daß die mit Bohrschlamm beladenen cuttings nach ihrer Abtrennung vom Bohrschlamm durch eine Wäsche mit kaltem Wasser - insbesondere mit Meerwasser - und bevorzugt unter Phaseninversion W/O zu O/W gereinigt werden können.

Verständlich wird insbesondere aus diesen Überlegungen die hohe Flexibilität der erfindungsgemäßen Lehre zur Beschaffenheit der im konkreten Fall einzusetzenden Ölphase. Auch hohe Anforderungen an die ökologische Verträglichkeit des Verfahrens bezüglich der zu entsorgenden cuttings können in W/O-Invertsystemen mit solchen Ölphasen erfüllt werden, die bisher aufgrund ihrer Umwelt-Unverträglichkeit und insbesondere ihrer unzureichenden Abbaubarkeit durch natürliche Abbauprozesse unter anaeroben Bedingungen nicht mehr eingesetzt werden konnten. Damit erschließen sich für die erfindungsgemäß beabsichtigte Optimierung der drei Hauptparameter (technische Perfektionierung und volle ökologische Verträglichkeit bei angemessenem Kosten/Nutzen-Verhältnis) ganz neue Möglichkeiten: Über die zuvor dargestellten Möglichkeiten zur gezielten oder selbsttätigen Reinigung und Befreiung der cuttings von den anhaftenden Ölanteilen findet bei der offshore-Entsorgung durch Dumping am Meeresboden nicht mehr der Aufbau eines größeren Vorrates an abzubauender Ölphase statt. Natürliche aerobe Abbauprozesse im sauerstoffreichen Bereich der Meeresoberfläche werden wirksam. Durch eine einfache Vorwäsche mit einer Waschflüssigkeit auf Basis von kaltem Wasser läßt sich der wenigstens überwiegende Ölanteil von den cuttings vor ihrem Dumping abtrennen.

Verständlich wird damit, daß sich für die erfindungsgemäße Lehre der gesamte bisher bekannte breite Bereich potentieller Ölphasen auftut. So sind für die Lehre der Erfindung Ölphasen beziehungsweise Ölmischphasen geeignet, die wenigstens anteilsweise - bevorzugt zum wenigstens überwiegenden Anteil - den nachfolgenden Stoffklassen zugeordnet sind:

Gesättigte Kohlenwasserstoffe (geradkettig, verzweigt und/oder cyclisch), olefinisch ungesättigte Kohlenwasserstoffe, insbesondere vom Typ LAO (lineare α-Olefine), IO (Interne Olefine) und/oder PAO (polymere α-Olefine), Aromaten, Naphthene, Carbonsäureester, Ether, Acetale, Kohlensäure-ester, Fettalkohole, Silikonöle, (Oligo)-Amide, (Oligo)-Imide und/oder (Oligo)-Ketone.

Der in diesem Zusammenhang zuvor aufgeführte Begriff der Carbonsäureester umfaßt einerseits entsprechende Ester von Monocarbonsäuren und/oder Polycarbonsäuren, andererseits entsprechende Ester von monofunktionellen Alkoholen und/oder polyfunktionellen Alkoholen. Auf die eingangs zitierten druckschriftlichen Veröffentlichungen zum Einsatz entsprechender Esterphasen auf dem hier betroffenen Sachgebiet, die auf Arbeiten der Anmelderin zurückgehen, wird in diesem Zusammenhang nochmals ausdrücklich verwiesen. Über die Offenbarung dieser Literaturstellen hinausgehend, hat sich für die erfindungsgemäße Variante jetzt aber auch noch das Folgende gezeigt:

In erfindungsgemäßen Ausgestaltungen der hier betroffenen Mehrkomponentengemische und insbesondere entsprechend aufgebauter Bohrspülflüssigkeiten können erstmalig Ester mehrfunktioneller Alkohole mit Monocarbonsäuren und dabei insbesondere Glycerinester natürlichen und/oder synthetischen Ursprungs als Ölphase oder als Bestandteil der Ölphase wirkungsvoll zum Einsatz kommen. In einschlägigen Druckschriften des Standes der Technik wird bekanntlich seit Jahren die Behauptung aufgestellt, Öle natürlichen Ursprungs - und damit entsprechende Glycerin-basierte Triester höherer ungesättigter Fettsäuren - als ökologisch verträgliche Ölphase in W/O-Invertspülungen einsetzen zu können. In den eingangs zitierten Veröffentlichungen der Anmelderin zu dem hier angesprochenen Gebiet der Esterbasierten Bohrspülungen ist dagestellt, daß diese Aussagen des druckschriftlichen Standes der Technik rein theoretischer Natur sind, sich in der Praxis bisher aber nicht haben verwirklichen lassen. Überraschenderweise zeigt sich jetzt unter Einsatz der erfindungsgemäßen und im nachfolgenden im einzelnen definierten Systeme, daß hier die Verwendung beziehungsweise Mitverwendung solcher Triglyceride natürlichen und/oder synthetischen Ursprungs als Ölphase oder in der Ölphase der Spülungen möglich ist. So können beispielweise Triglyceride pflanzlichen und/oder tierischen Ursprungs - beispielsweise von der Art des Rüböls oder des fischöls - zum Einsatz kommen, die sowohl aus ökologischen Überlegungen als auch aus Betrachtungen zum Kosten/Nutzen-Verhältnis hochinteressant sein können. Offensichtlich schaffen die mit der technischen Verwirklichung der erfindungsgemäßen Konzeption verbundenen Abwandlungen in der Zusammensetzung der Spülungen - möglicherweise Wahl der bevorzugten Emulgatoren nach Art und Menge - derart abgewandelte Grundvoraussetzungen, daß hier der seit langem angestrebte technische Einsatz solcher Ölphasen, insbesondere natürlichen Ursprungs, erstmals wirklich möglich wird.

Grundsätzlich sind damit von ihrer chemischen Struktur her alle Ölphasen geeignet, die die Einstellung der in der hier betroffenen Technologie notwendigen physikalischen Parameter zulassen, auf die zu einem späteren Zeitpunkt noch eingegangen wird. Der Gesichtspunkt der optimierten ökologischen Verträglichkeit bleibt natürlich ein wichtiger Gesichtspunkt im Rahmen der Auswahl der Ölphase, ihm kommt aber nicht mehr - auch unter Berücksichtigung der Auflagen des Gesetzgebers - die heutige Bedeutung zu. Durch den Einsatz der temperaturgesteuerten gezielten Phaseninversion wird die umweltkonforme ökologische Entsorgung gerade des Anteiles der Bohrspülung möglich, der bis zum heutigen Tage beim Arbeiten mit Spülungen auf W/O-Invertbasis die entscheidenden Schwierigkeiten bereitet.

Über diese Erleichterung hinausgehend erschließt die erfindungsgemäße Lehre aber auch die Möglichkeit zur Verwirklichung des angestrebten Umweltschutzes in einem bis heute nicht bekannten Ausmaß. Durch Auswahl besonders umweltverträglicher Ölphasen für die Invertspülung einerseits und durch die erfindungsgemäß gegebene Möglichkeit die Problematik des Abbauprozesses auf ein Minimum abzusenken, kann in Summe ein bis heute nicht bekanntes Arbeitsergebnis im Sinne der erfindungsgemäßen Zielvorstellung eingestellt werden. Zu berücksichtigen ist in diesem Zusammenhang insbesondere auch die - an sich bekannte, jetzt aber erfindungsgemäß mit besonderem Vorteil einzusetzende - Möglichkeit, ausgesuchte Abmischungen unterschiedlicher Öle als Ölphase des Spülungssystems zu verwenden. So können Gemische einerseits von vergleichsweise schwerer anaerob und/oder aerob abbaubaren Ölen mit andererseits besonders leicht anaerob und/oder aerob abbaubaren Ölen zum Einsatz kommen, die in der erfindungsgemäß optimierten Form der cutting-Entsorgung einen wichtigen Schritt in Richtung auf das erfindungsgemäß angestrebte Ziel der Gesamtoptimierung darstellen. In diesem Zusammenhang sei zunächst auf eine weitere Möglichkeit der Abwandlung der hier betroffenen Technologie der W/O-Invertsysteme eingegangen. Auch hier bieten sich substantielle Erweiterungen zu technisch fortschrittlichem Handeln gegenüber dem einschlägigen Stand der Technik an:

W/O-Invertsysteme konventioneller Art und insbesondere entsprechende Invertbohrspülungen enthalten nach der heutigen Praxis die Ölphase - bezogen auf das Volumenverhältnis der Summe von Öl- und Wasser-Phase - in einer Menge von wenigstens 50 Vol.-%. Üblicherweise liegt der Gehalt der Ölphase im praktischen Einsatz deutlich höher, beispielsweise im Bereich von 70 bis 90 Vol.-% des Öl/Wasser-Gemisches. Die einschlägige Literatur erwähnt zwar auch Öl-abgemagerte Invertspülungen, in der Praxis, insbesondere der heute geforderten Systeme mit hinreichender ökologischer Verträglichkeit, spielt dieser Bereich der vergleichsweise ölarmen Abmischungen aber keine Rolle.

Schon eingangs ist darauf hingewiesen worden, daß der Bereich der Phaseninversionstemperatur unter anderem mitbestimmt wird durch das Mengenverhältnis an Ölphase zu insbesondere nichtionischem Emulgator/-Emulgatorsystem. Dabei gilt: Je höher die eingesetzte Menge an Emulgator/Emulgatorsystem - bezogen auf Menge an Ölphase - gewählt wird, um so stärker wird in der Regel der Temperaturbereich zur Einstellung der PIT abgesenkt. Gleichzeitig damit wird aber die Stabilität der W/O-Invertemulsion im praktischen Arbeiten so stark angehoben, daß sich der Bereich für praktisch brauchbare Mengenverhältnisse im jeweiligen Öl/Wasser-Gemisch substantiell erweitert. Damit werden für den Aufbau der mehrphasigen und bevorzugt pumpfähigen Abmischungen Mengenverhältnisse (Volumenteile) von Wasser-basierter Phase (W) zur Ölphase (Öl) in den folgenden Bereichen zugänglich: 90 bis 10 W auf 10 bis 90 Öl. Bevorzugt können dabei insbesondere Mischungsverhältnisse von 85 bis 20 W auf 15 bis 80 Öl sein. Unter Berücksichtigung der im nachfolgenden definierten Emulgatoren/Emulgatorsysteme ist es ohne Schwierigkeiten möglich mit W/Öl-Mischungsverhältnissen zu arbeiten, die die W-Phase in Mengen von wenigstens 30 oder 40 Volumenteilen oder sogar auch von wenigstens 50 Volumenteilen - und dabei beispielsweise in Mengen von 55 bis 85 Volumenteilen - enthalten. Die Ölphase kann damit auch zur mengenmäßig untergeordneten Komponente werden, die beispielsweise im Bereich von wenigstens 10 bis 15 Volumenteilen, vorzugsweise von 20 bis 50 Volumenteilen - jeweils bezogen auf die Summe von W und Öl - stabile W/O-Invertbedingungen im Temperaturbereich des praktischen Einsatzes im Inneren des Erdreichs gewährleistet. In diesem Sinne können erfindungsgemäß Mehrkomponentengemische bevorzugt sein, deren Anteil an Wasser-basierter Phase (Vol.-% bezogen auf Mischung W/Öl) gleich/größer 30 bis 35%, vorzugsweise gleich/größer 40% und weiterhin bevorzugt gleich/größer 50%, ist. Dem Mischungsbereich mit einem überwiegenden Wasseranteil kann besondere Bedeutung zukommen, wobei hier Mengen bis zu 85 Vol.-% und insbesondere dem Bereich von 55 oder 60 bis 80 Vol.-% der Wasser-basierten Phase wiederum besonders bevorzugt sein können. In den Rahmen der Erfindung fallen damit W/O-Invertspülungen mit stark abgemagertem Gehalt an Ölphase, der - bezogen auf die Flüssigphasen - nicht mehr als 20 bis 40 Vol.-% ausmachen muß, gleichwohl aber die gestellten Anforderungen im Einsatz erfüllt. Daß hier auch die Entsorgung substantiell erleichtert wird leuchtet sofort ein.

Zur chemischen Beschaffenheit insbesondere nichtionischer Emulgatoren, die zur Temperatur-gesteuerten Phaseninversion befähigt sind, beziehungsweise zur Beschaffenheit entsprechende nichtionische Komponenten enthaltender Emulgatorsysteme kann auf das außergewöhnlich umfangreiche Fachbuchwissen und das sonstige druckschriftliche einschlägige Material verwiesen werden. Schon die eingangs zitierte Veröffentlichung SHINODA et al., Encyclopedia of Emulsion Technology, 1983, Vol.1, 337 bis 367, gibt eine Auflistung von über 100 speziellen Vertretern von Emulgatoren, die weitaus überwiegend der Klasse der nichtionischen Emulgatoren zuzuordnen sind. Hierbei ist in der tabellarischen Aufstellung (Tabelle 4 a.a.O.) der jeweiligen chemischen Komponente auch ihr HLB-(number)Wert zugeordnet. Dabei ist insbesondere der Zahlenbereich von 1 bis 20 erfaßt. Zum einschlägigen druckschriftlichen Material wird weiterhin verwiesen auf die Veröffentlichung Gordon L. Hollis, Surfactants Europa, Third Edition, The Royal Society of Chemistry, dort insbesondere Kapitel 4, Nonionics (Seiten 139 bis 317). Zu der ungewöhnlich umfangreichen einschlägigen Literatur wird weiterhin beispielsweise verwiesen auf die nachfolgenden Veröffentlichungen, die in Buchform erschienen sind: M.J. Schick "NONIONIC SURFACTANTS", Marcel Dekker, INC, New York, 1967; H.W. Stache "ANIONIC SURFACTANTS", Marcel Dekker, INC, New York, Basel, Hongkong; Dr.N.Schönfeldt "Grenzflächenaktive Ethylenoxid-Addukte", Wissenschaftliche Verlagsgesellschaft mbH, Stuttgart 1976.

Aus diesem umfangreichen Wissen zu Emulgatoren beziehungsweise Emulgatorsystemen wenigstens anteilsweise nichtionischer Konstitution kann unter Einsatz des ebenfalls eingangs zitierten Fachwissens (SHINODA et al. sowie Th. Förster et al.) der Bereich der Phaseninversionstemperatur für vorgegebene Stoffgemische aus Ölphase, Emulgator bzw. Emulgatorgemische und wäßriger Phase berechnet werden. Im nachfolgenden werden dementsprechend einige zusätzliche, erfindungsgemäß bevorzugte Bestimmungselemente für die Auswahl der Emulgatoren beziehungsweise Emulgatorsysteme gebracht.

Zur Steuerung und Anpassung des erwünschten Bereiches zur Phaseninversionstemperatur (PIT) an die jeweils vorgegebene Abmischung des Mehrkomponentensystems - insbesondere unter Berücksichtigung der Auswahl der Ölphase nach Art und Menge sowie der Beladung der wäßrigen Phase mit löslichen Komponenten - hat es sich als hilfreich erwiesen, mehrkomponentige Emulgatorsysteme einzusetzen. Dabei können Abmischungen bevorzugt sein, die wenigstens eine Emulgator-Hauptkomponente zusammen mit Co-Emulgatoren enthalten. In einer bevorzugten Ausführungsform sind dabei wiederum Emulgator-Hauptkomponenten vorgesehen, die zusammen mit der Eignung zur Temperatur-gesteuerten Phaseninversion vergleichsweise höhere Zahlenwerte des HLB-(number)Bereiches aufweisen. Komponenten mit entsprechenden HLB-Werten des Bereiches von etwa 6 bis 20 und vorzugsweise von 7 bis 18. haben sich als geeignete nichtionische Emulgator-Hauptkomponenten erwiesen. Diese Hauptkomponenten werden bevorzugt gemeinsam mit stärker lipophilen Co-Emulgatoren eingesetzt, die - bezogen auf die jeweilige(n) Emulgator-Hauptkomponente(n) - ihrerseits niedrigere HLB-(number)Werte besitzen. Brauchbare Co-Emulgatoren liegen dementsprechend zunächst -einmal in dem Zahlenbereich unterhalb des zuvor genannten Zahlenbereiches für die Emulgator-Hauptkomponente(n). Geeignete Co-Emulgatoren können auch in diesen Zahlenbereich mit ihrem HLB-Wert fallen, liegen dann aber in der Regel bei niedrigeren Werten als die in Abmischung vorliegenden Emulgator-Hauptkomponente(n) mit ihren jeweils individuellen Zahlenwerten.

Für die praktische Verwirklichung der erfindungsgemäßen Lehre hat sich die nachfolgende Variante als besondere interessant erwiesen: Die heute im praktischen Verfahren insbesondere in Öl-basierten Invertspülungen eingesetzten W/O-Emulgatoren können in einer wichtigen Ausführungsform der erfindungsgemäßen Lehre die Funktion des vergleichsweise stärker lipophilen Co-Emulgators in den erfindungsgemäß definierten Emulgatorgemischen übernehmen. Daß diese Variante des erfindungsgemäßen Handelns besonders interessant sein kann, leuchtet sofort ein. Das bisherige Wissen der Fachwelt zum Aufbau Öl-basierter W/O-Invertemulsionen bzw. entsprechender Bohrschlämme kann im wesentlichen beibehalten werden. Lediglich durch Zugabe einer oder mehrerer weiterer Emulgatorkomponenten der zuvor definierten Art mit der Befähigung zur Temperatur-gesteuerten Phaseninversion im W/O-Invertsystem wird die Verwirklichung der erfindungsgemäßen Lehre ermöglicht. Die Umstellung in der Praxis erprobter Mehrkomponentensysteme der hier betroffenen Art auf die Erfüllung der Anforderungen der erfindungsgemäßen Lehre kann damit substantiell vereinfacht werden. So können konventionelle Spülungen- auch wenn sie bereits im Gebrauch sind - durch Zugabe der beschriebenen Co-Emulgatoren in erfindungsgemäße PIT-Systeme überführt werden.

Besondere Bedeutung kann für das Arbeiten im Sinne der erfindungsgemäßen Lehre dem folgenden Sachverhalt zukommen:

In den Rahmen geeigneter Ölphasen fallen Verbindungen, die gleichzeitig eine ausgesprochene Co-Emulgatorwirkung in dem Zusammenspiel Emulgatorsystem/Ölphase besitzen. Ein klassisches Beispiel hierfür sind lipophile Fettalkohole natürlichen und/oder synthetischen Ursprungs. Hinreichende Fließfähigkeit unter den Einsatzbedingungen vorausgesetzt, können sie ein wertvoller Bestandteil der Ölphase sein oder sogar die Ölphase als ganzes ausbilden, gleichzeitig wirken sie auf zugegebene stärker hydrophile Emulgator-Hauptkomponenten im Sinne der angestrebten Absenkung des PIT-Bereiches. Alkohole dieser Art sind bekanntlich ökologisch verträgliche Komponenten. Sie sind sowohl aerob wie anaerob abbaubar. Ihre Abmischungen mit anderen Ölkomponenten, die insbesondere auch schlechter abbaubar sein können, führen dann zu wertvollen Arbeitsergebnissen im Sinne der erfindungsgemäßen Konzeption der Gesamtoptimierung. Aber auch andere aus der Literatur bekannte Ölphasen, die überwiegende lipophile Molekülanteile mit eingebauten Gruppen erhöhter Polarität aufweisen, können in entsprechender Weise Co-Emulgatorwirkung besitzen. Als Beispiele seien hier die (Oligo)-Amide, (Oligo)-Imide und (Oligo)-Ketone genannt.

Aus dem großen Bereich der nichtionischen Emulgatoren lassen sich erfindungsgemäß besonders geeignete Emulgator-Hauptkomponenten und/oder Co-Emulgatoren wenigstens einer der nachfolgenden Stoffklassen zuordnen:

(Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Dabei bestimmt in bekannter Weise die Länge der Alkoxylatreste im Verhältnis zu den im Molekül vorliegenden lipophilen Resten das jeweils gegebene Mischungsverhältnis von hydrophilem und hydrophobem Verhalten und die damit verbundene Zuordnung der HLB-Werte. Alkoxylate der angegebenen Art sind bekanntlich als solche - d.h. mit endständiger freier Hydroxylgruppe am Alkoxylatrest - nichtionische Emulgatoren, die entsprechenden Verbindungen können aber auch Endgruppen-verschlossen sein, beispielsweise durch Veresterung und/-oder Veretherung.

Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo-)Alkoxyreste und dabei insbesondere entsprechende Oligo-Ethoxyreste eingebunden enthalten. Die polyfunktionellen Alkohole mit 2 bis 6 OH-Gruppen im Grundmolekül beziehungsweise die sich davon ableitenden Oligomeren können insbesondere Diole und/oder Triole beziehungsweise deren Oligomerisierungsprodukte sein, wobei dem Glykol und dem Glycerin oder ihren Oligomeren besondere Bedeutung zukommen kann. Aber auch andere polyfunktionelle Alkohole der hier zusammenfassend genannten Art wie Trimethylolpropan, Pentaerythrit bis hin zu Glykosiden - beziehungsweise ihren jeweiligen Oligomeren - können Grundmoleküle für die Umsetzung mit lipophile Reste enthaltenden Säuren und/oder Alkoholen sein, die dann wichtige Emulgatorkomponenten im erfindungsgemäßen Sinne sind. Dem Bereich von Partialethern mehrfunktioneller Alkohole sind auch bekannte nichtionische Emulgatoren von der Art der Ethylenoxid/Propylenoxid/Butylenoxid-Blockpolymeren zuzuordnen.

Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide. Aminoxide und Lecithine. Die Mitverwendung heute handelsüblicher Alkyl(poly)glykosid-Verbindungen (APG-Verbindungen) als Emulgatorkomponenten im erfindungsgemäßen Sinn kann u.a. deswegen besonders interessant sein. weil es sich hier um eine Emulgatorklasse besonders ausgeprägter Ökoverträglichkeit handelt. Dabei ist es z.B. zur Steuerung der Phaseninversion in die erfindungsgemäß beschriebenen Temperaturbereiche auch möglich anteilsweise andere Emulgatorhauptkomponenten, z.B. Niotensidverbindungen mit stärker ausgeprägtem Phaseninversionsverhalten mit zu verwenden. In Betracht kommen z.B. die schon mehrfach erwähnten Oligo-Alkoxylat-Verbindungen, insbesondere entsprechende Verbindungen vom Typ der Oligo-Ethoxylatkomponenten. Möglich ist es allerdings auch diese Variation der verbesserten Steuerbarkeit des Phaseninversionsverhaltens durch eine entsprechende Oligo-Alkoxylierung der APG-Komponenten selber einzustellen. Durch geeignete Auswahl der APG-Komponenten nach Art und Menge als Hauptemulgator und Co-Emulgatoren. z.B. heute üblicher W/O-Invert-Emulgatoren, können aber auch hier ohne weitere Hilfsstoffe mit Emulgatorwirkung die erfindungsgemäßen Anforderungen erfüllt werden.

Ohne Anspruch auf Vollständigkeit seien aus den hier aufgezählten Stoffklassen geeigneter Emulgatorkomponenten zusätzlich die folgenden Vertreter benannt: Die (Oligo)-Alkoxylate von lipophile Reste enthaltenden Grundmolekülen können sich insbesondere von ausgewählten Vertretern aus den nachfolgenden Klassen der lipophile Reste enthaltenden Grundmoleküle ableiten: Fettalkohole, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Wie angegeben können die jeweiligen Umsetzungsprodukte auch wenigstens anteilsweise Endgruppen-verschlossen sein. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbindungen mit Ethergruppierungen. Auf das umfangreiche Fachwissen kann hier verwiesen werden. Solche Partialester und/oder -ether können insbesondere auch Grundmoleküle für eine (Oligo)-Alkoxylierung sein.

Wie zuvor schon ausgeführt, ist ein wesentliches Bestimmungselement für die erfindungsgemäße Lehre, daß die Emulgatoren/Emulgatorsysteme in ihrer Einsatzmenge im Mehrkomponentengemisch auf den hier vorliegenden Anteil an Ölphase abgestimmt sind. Bevorzugte Emulgatormengen liegen dementsprechend in dem Bereich von gleich/größer 1 Gew.-%, vorzugsweise in dem Bereich von 5 bis 60 Gew.-% - bezogen jeweils auf die Ölphase. Für das praktische Arbeiten haben sich die folgenden Mengenbereiche für die erfindungsgemäß eingesetzten Emulgatoren/Emulgatorsysteme- wiederum bezogen auf die Ölphase - als besonders geeignet erwiesen: 10 bis 50 Gew.-%, zweckmäßigerweise 15 bis 40 Gew.-% und insbesondere Mengen in dem Bereich von 20 bis 35 Gew.-%. Hier liegen also - verglichen mit konventionellen W/O-Invertemulsionssystemen des erfindungsgemäß betroffenen Arbeitsbereiches - vergleichsweise größere Emulgatormengen vor. Das muß aber zu keinem Nachteil führen: Einerseits kann auf diesem Wege - wie zuvor angegeben - die notwendige Ölmenge im Wasser/Öl-Gemisch gegenüber der heutigen Praxis stark abgesenkt werden, ohne hierdurch Nachteile in Kauf nehmen zu müssen. Zum anderen ist der zuvor dargestellte Sachverhalt zu berücksichtigen, daß ausgewählte Ölphasen - beispielsweise dargestellt an den Fettalkoholen - eine Doppelfunktion übernehmen können und damit sowohl Ölphase als auch gleichzeitig wirksamer Co-Emulgator im erfindungsgemäß formulierten System sind. Es leuchtet ein, daß auch aus diesem Gesichtspunkt sich völlig neue Ansätze zur System- und Prozeßoptimierung im Sinne der erfindungsgemäßen Aufgabenstellung ableiten.

Zur Auswahl der Ölphasen gelten über die bisher gemachten Angaben hinaus noch die folgenden Ergänzungen: Die - zunächst emulgatorfreie - Ölphase soll zum wenigstens überwiegenden Anteil unlöslich in der wäßrigen Emulsionsphase und dabei vorzugsweise auch schon bei Raumtemperatur fließ- und pumpfähig sein. Flammpunkte der Ölphasen oberhalb von 50 bis 60°C, vorzugsweise gleich/größer 80 bis 100°C und insbesondere gleich/größer 120°C, sind erwünscht beziehungsweise bevorzugt. Es kann weiterhin zweckmäßig sein, Ölphasen zu verwenden, die im Temperaturbereich von 0 bis 10°C eine Brookfield(RVT)-Viskosität von nicht mehr als 55 mPas und vorzugsweise von nicht mehr als 45 mPas aufweisen. Insoweit kann auf die zitierte einschlägige Literatur zu modernen W/O-Invertemulsionen verwiesen werden. Insbesondere wird hier Bezug genommen auf die Offenbarung der eingangs genannten EP-Druckschriften der Schutzrechte der Anmelderin, deren Offenbarung hiermit ausdrücklich auch zum Gegenstand der vorliegenden Erfindungsoffenbarung gemacht wird.

Entsprechendes gilt auch für die als Bohrschlamm ausgebildeten Gemische aus wäßriger Phase, Ölphase, Emulgatoren und üblichen Zusatzstoffen. Hier gilt insbesondere, daß das als Bohrschlamm ausgebildete Gemisch im Temperaturbereich von 10 bis 15°C oberhalb der Grenztemperatur zwischen Emulsionsmittelphase und W/O-Invertbereich eine Plastische Viskosität (PV) nicht größer 100 mPas aufweist. Bevorzugt sind entsprechende Bohrschlämme, deren PV-Wert nicht größer als 80 mPas ist und insbesondere im Bereich von 30 bis 45 mPas liegt. Die Fließgrenze (YP) erfindungsgemäß aufgebauter Bohrschlämme soll im Temperaturbereich von 10 bis 15°C oberhalb der Grenztemperatur zwischen Emulsionsmittelphase und W/O-Invertbereich nicht größer als 80 lb/100 ft² sein. Bevorzugte Werte für diese Fließgrenze (YP) liegen hier bei Werten nicht größer 50 lb/100 ft² und insbesondere im Bereich oberhalb 4 bis 5 lb/100 ft², z.B. im Bereich von 10 bis 25 lb/100 ft².

Der jeweils zweckmäßige Gesamtaufbau des fließfähigen Hilfsmittels im Sinne der erfindungsgemäßen Lehre richtet sich im übrigen nach den heute üblichen Anforderungen der Praxis. Auch hier kann insoweit auf den umfangreichen druckschriftlichen Stand der Technik verwiesen werden, der im Rahmen der Erfindungsbeschreibung insbesondere zu den W/O-Invertspülungen benannt ist. Entsprechende Abmischungen im Sinne der Erfindung enthalten also beispielsweise als Bohrschlamm zusätzlich in diesem Einsatzgebiet übliche Hilfsstoffe wie Viskositätsbildner, fluid-loss-Additive, feinteilige Beschwerungsstoffe, Salze, gewünschtenfalls Alkalireserven und/oder Biocide. Nähere Angaben, die auch für die erfindungsgemäße Ausgestaltung von Bohrspülungen gelten, finden sich beispielsweise in der EP 374 672. Auch die Mitverwendung wasserlöslicher Methylglykosidverbindungen in der wäßrigen Phase fällt in den Rahmen der Erfindung, vgl. hierzu beispielsweise PCT WO 94/14919.

Auf eine Besonderheit sei in diesem Zusammenhang eingegangen, die sich auf an sich bekanntes Wissen des hier betroffenen Fachgebietes stützt, in der Zusammensetzung bisheriger W/O-Invertspülungen jedoch in der Regel keine Rolle gespielt hat:

Es ist bekannt, daß Wasser-basierte Emulsionsspülungen und insbesondere Spülsysteme vom O/W-Typ durch Mitverwendung von wasserlöslichen Polymerverbindungen auch im vergleichsweise niedrigen Temperaturbereich gegen ein unerwünschtes Absetzen dispergierter Feststoffanteile der Spülung stabilisiert werden können. Geeignete wasserlösliche Polymerverbindungen sowohl natürlichen als auch synthetischen Ursprungs sind hier grundsätzlich geeignet. Auf das einschlägige Fachwissen kann hier verwiesen werden.

Die erfindungsgemäße Lehre sieht die Möglichkeit vor, gegebenenfalls auch die Bohrspülung als Ganzes außerhalb des Einsatzbereiches soweit abzukühlen, daß hier die Phaseninversion zur O/W-Emulsionsspülung stattfindet. Hier gelten dann für die hinreichende Stabilisierung des Systems die aus diesem Arbeitsbereich gültigen Regeln, so daß also insbesondere hier die Mitverwendung solcher stabilisierender wasserlöslicher Polymerverbindungen und/oder auch wasserquellbarer Tone miterwogen werden kann. Ihre Gegenwart im Zustand der W/O-Invertspülung im heißen Arbeitsbereich stört nicht.

Ausführliche Sachinformationen zum Aufbau von Arbeitsflüssigkeiten der erfindungsgemäß betroffenen Art und insbesondere Wasser-basierten bzw. Öl-basierten Bohrspülungen sowie zu den in diesem Zusammenhang in der Praxis verwendeten Hilfsstoffen finden sich beispielsweise in dem eingangs genannten Fachbuch George R. Gray und H.C.H. Darley "Composition in Properties of Oil Well Drilling Fluids", 4. Auflage, 1980/81, Gulf Publishing Company, Houston. Im hier betroffenen Sachzusammenhang wird insbesondere verwiesen auf die Kapitel 1 "Introduction to Drilling Fluids" und Kapitel 11 "Drilling Fluids Components".

Charakteristisches Merkmal für alle Hilfsflüssigkeiten und insbesondere Bohrspülungen im Sinne der erfindungsgemäßen Definition bleibt trotz Mitverwendung aller an sich bekannten Hilfsstoffe: Durch die richtige Auswahl und Abstimmung der Emulgatoren/Emulgatorsysteme nach Art und Menge, insbesondere auf die Beschaffenheit der eingesetzten Ölphase, bildet sich im Kontakt mit dem Erdreich-Inneren und der sich hier einstellenden hohen Arbeitstemperatur wenigstens an der Kontaktfläche von heißem Erdreich/Emulsion die W/O-Invertphase oberhalb der Emulsionsmittelphase aus. Außerhalb des Arbeitsbereiches im Erdreich-Inneren ist die Temperaturabsenkung vorgesehen, wobei wiederum die Auswahl und Abstimmung der zuvor genannten Parameter das Verhalten der hier befindlichen Anteile der Bohrspülung in ihrer Gesamtheit oder in davon nochmals abgetrennten Anteilen in unterschiedlichster Weise gesteuert werden kann. Letztlich kann damit die eingangs formulierte erfindungsgemäße Zielvorstellung in bisher nicht bekannter Weise verwirklicht werden.

Die nachfolgenden Beispiele schildern konkrete Ausführungsformen der erfindungsgemäßen Lehre, ohne diese darauf zu beschränken.

### Beispiele

Die nachfolgenden Beispiele 1 bis 7 stellen zunächst einmal Rahmenrezepturen zusammen, die durch das Grundsystem Ölphase/Wasser bzw. wäßrige Phase/Emulgator bzw. Emulgatorsystem gekennzeichnet sind. Während die Rezeptur des Beispiels 1 sich auf diese Grundkomponenten einschränkt, werden in den nachfolgenden Beispielen 2 bis 7 praxisübliche Zusatzkomponenten aus dem Bereich der Bohrspülschlämme mitverwendet.

In den tabellarischen Zusammenfassungen dieser Beispiele sind dann dem jeweiligen System die ermittelten Zahlenwerte für den Temperaturbereich der Phaseninversion - PIT/°C - zugeordnet. Dabei ist der PIT-Bereich jeweils durch seine Temperaturuntergrenze und Temperaturobergrenze gekennzeichnet.

Die experimentelle Ermittlung der Phaseninversionstemperatur erfolgt dabei durch Bestimmung der elektrischen Leitfähigkeit der wäßrigen Emulsionen in Abhängigkeit von der Temperatur. Einzelheiten zur Versuchsdurchführung finden sich in den im Allgemeinen Beschreibungsteil bereits benannten Druckschriften EP 0 345 586 und EP 0 521 981.

In den Rezepturen dieser Beispiele sind einige der jeweils eingesetzten Komponenten durch ihre Handelsnamen identifiziert. Dazu gilt im einzelnen:

| Ölphasen: | |
|---|---|
| Cetiol OE OMC 586 | Etheröl auf Basis Di-n-Octylether Ölphase auf Basis eines Estergemisches aus im wesentlichen gesättigten Fettsäuren auf Basis Palmkern und 2-Ethylhexanol. das zum weitaus überwiegenden Teil auf C_{12/14}-Fettsäuren zurückgeht |
| Mineralöl Ha-359 | low-aromatic Mineralöl-Fraktion für Invert-Spülungen |

| Emulgatoren: | |
|---|---|
| Dehydol LT 5 | C₁₂₋₁₈-Fettalkohol mit 5EO |
| CETIOL HE | Polyol-Fettsäure-Ester auf Basis Polyoxyethylen-Glyceryl-Monococoat |
| DEHYMULS SML | Sorbitan-Monolaurat |
| Eumulgin EP4 Lutensol | Oleylalkohol + 4 EO |
| TO5 bzw.T07 | Isotridecylalkohol + 5 E0 bzw. + 7 EO |
| Dehydol 980 | C₁₀₋₁₄-Fettalkohol + 1,6 PO + 6,4 EO |
| RS 1100 | Sojapolyol 85 + 61 EO |
| Ez-Mul NTE | W/O-Invert-Emulgator, Handelsprodukt der Fa. BAROID, Aberdeen |

| Hilfsstoffe: | |
|---|---|
| Geltone II | Organophiler Bentonit |
| Duratone | Organophiler Lignit |
| Tylose VHR sowie | |
| CMC E HVT | Kaltwasserlösliche Polymerverbindungen auf Basis Carboxymethylcellulose |
| Natrosol Plus | Kaltwasserlösliche Polymerverbindung auf Basis Hydroxyethylcellulose (HEC) |

Die darüberhinaus in den Tabellen aufgezählten Zusatzstoffe sind aus ihrer chemischen Identifizierung heraus verständlich.

### Beispiel 1

Es werden mengengleiche Abmischungen der Ölphase auf Etherbasis und Wasser beziehungsweise einer 5 Gew.-%igen wäßrigen Lösung von CaCl₂ unter Einsatz eines nichtionischen Emulgators nach üblicher Arbeitsweise homogenisiert. An den jeweiligen Emulsionen wird dann die elektrische Leitfähigkeit in Abhängigkeit von der Temperatur ermittelt und damit der Temperaturbereich der Phaseninversion bestimmt. Im einzelnen gelten hier die folgenden zahlenmäßigen Daten:

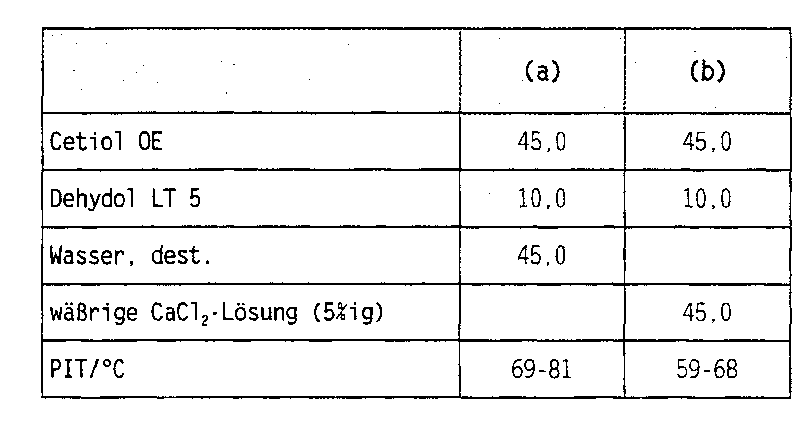

### Beispiel 2

In drei Vergleichsversuchen wird die Abhängigkeit des PIT-Bereiches grundsätzlich vergleichbarer, im einzelnen jedoch abgewandelter Systeme bestimmt. Dabei gilt im einzelnen:

Die Etherölphase und der Emulgator entsprechen in allen Ansätzen den Verbindungen des Beispiels 1. Zusammen damit werden jetzt aber übliche Hilfsstoffe aus dem Bereich der beschwerten Bohrschlämme als Zusatzkomponenten eingemischt. Die Abweichungen der drei Ansätze dieses Beispiels kennzeichnen sich wie folgt:

### Beispiel 2 a

### Verhältnis Ölphase/wäßrige Phase (5%iges CaCl₂) in gleichen Gewichtsmengen

### Beispiel 2 b:

Der Anteil der Ölphase wird gegenüber der wäßrigen Phase stark abgemagert (12 Gewichtsteile auf 41 Gewichtsteile wäßrige Phase). Zusätzlich wird in beiden Beispielen 2 a und 2 b eine Kaltwasser-lösliche Polymerverbindung als Verdicker der wäßrigen Phase auch im niederen Temperaturbereich beigemischt.

### Beispiel 2 c

Die Grundrezeptur des Beispiels 2 b wird beibehalten, jedoch mit den folgenden Abwandlungen: Der Salzgehalt der wäßrigen Phase wird von 5 Gew.-% CaCl₂ auf 30 Gew.-% CaCl₂ angehoben. Dabei wird in der Rezeptur kein Kaltwasser-löslicher Verdicker mitverwendet.

An allen Stoffgemischen wird der Temperaturbereich der Phaseninversion (PIT/°C) bestimmt. Darüberhinaus wird die Viskosität der Stoffgemische einmal bei einer Temperatur deutlich unterhalb des PIT-Bereiches - Viskosität bei 25°C - und zum anderen bei einer Temperatur deutlich oberhalb des PIT-Bereiches -Viskosität bei 70°C - bestimmt.

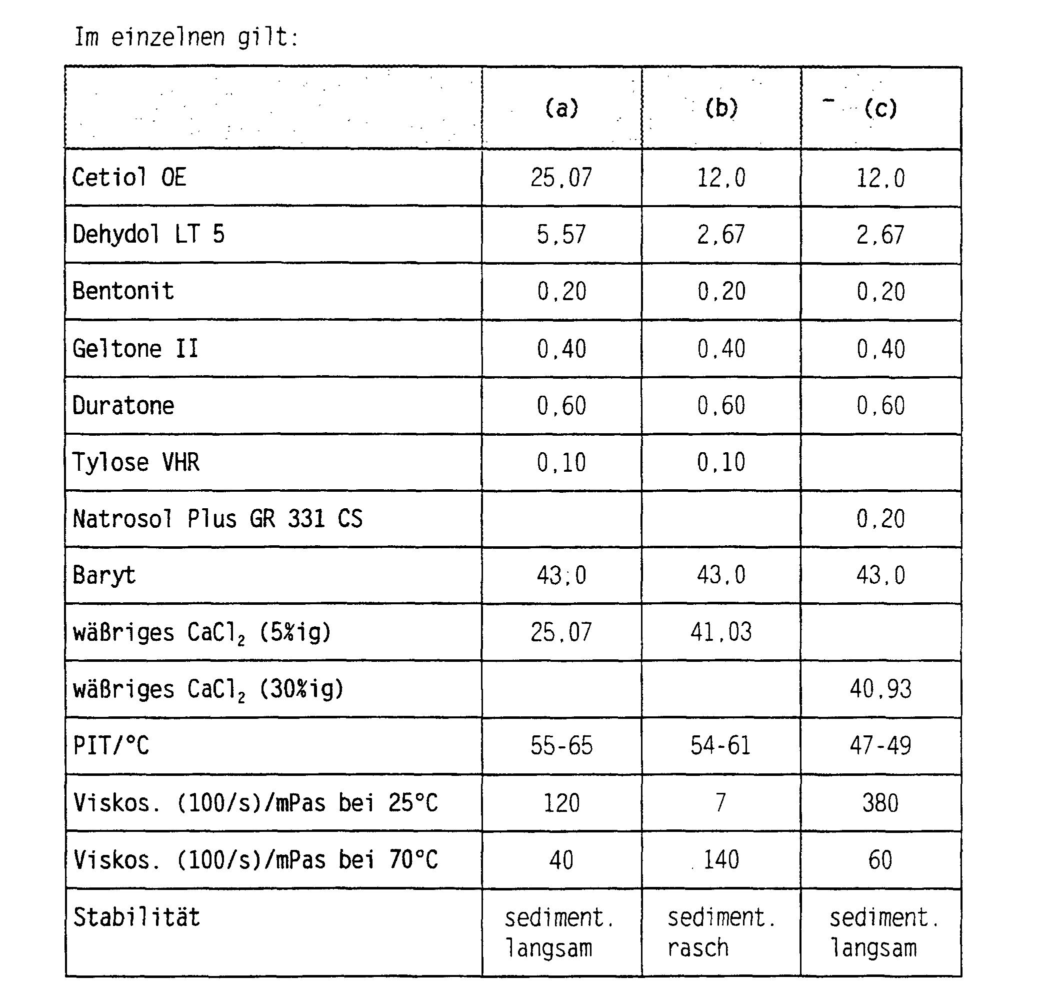

Ersichtlich wird auch hier die deutliche Absenkung des PIT-Bereiches durch Steigerung der Salzkonzentration in der wäßrigen Phase (Beispiel 2 c gegenüber Beispiel 2 b). Die niedere Viskosität des Mehrstoffgemisches im Zustand der wasserbasierten O/W-Spülung bei Temperaturen unterhalb der PIT (Beispiel 2 b) wird durch die Mitverwendung der geringen Menge an polymerem Verdicker auf HEC-Basis aufgefangen.

### Beispiel 3

Die nachfolgenden Beispiele 3 a und 3 b modifizieren die Ölphase des jeweiligen Mehrkomponentengemisches. Eingesetzt wird jetzt das Esteröl OMC 586. Dabei wird - unter Anlehnung an die Grundrezepturen des Beispiels 2 - die Ölphase und die Wasserphase mengengleich (Beispiel 3 a) eingesetzt und nachfolgend (Beispiel 3 b) das O/W-Verhältnis wieder sehr stark abgemagert. Für beide Stoffmischungen wird der Temperaturbereich der Phaseninversion bestimmt.

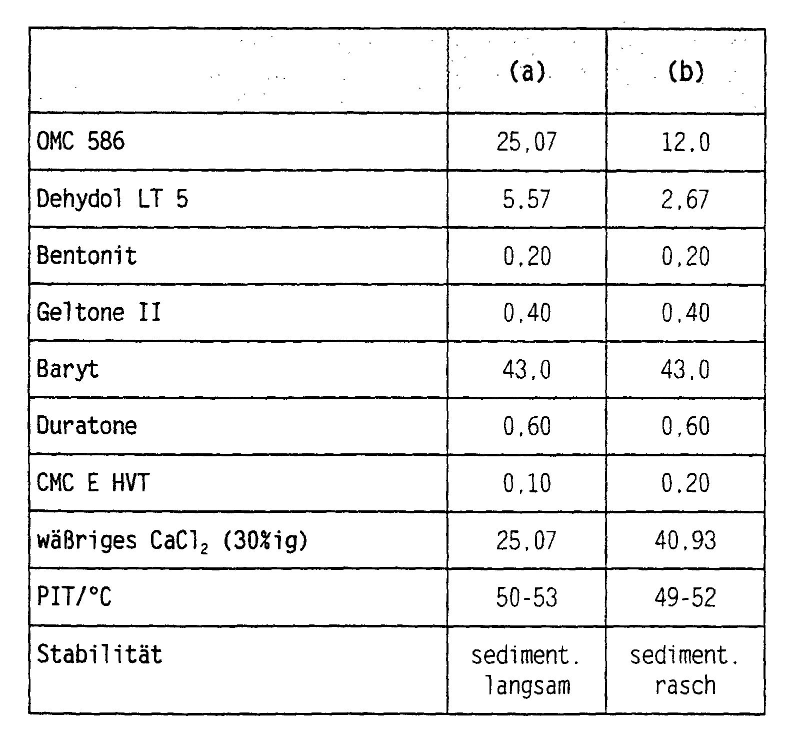

### Beispiel 4

In Anlehnung an die Rezeptur des Beispiels 3 b wird eine Esteröl-basierte Spülung zusammengestellt und der Temperaturbereich der Phaseninversion bestimmt. Dabei sind in der nachfolgenden tabellarischen Zusammenstellung die beiden gemessenen Bereichswerte im aufsteigenden Temperaturast (PIT/°C "aufwärts") und im absteigenden Temperaturast (PIT/°C "abwärts") getrennt aufgeführt.

Weitere Proben dieses Mehrkomponentengemisches werden jetzt-zunächst einer konventionelle Alterung durch Behandlung für den Zeitraum von 16 Stunden im Autoklaven - im sogenannten roller-oven - unterworfen. Dabei wird die Alterung an einer Probe - Beispiel 4 b - bei einer Temperatur von 250°F vorgenommen, die Alterung einer weiteren Probe erfolgt bei einer Temperatur von 300°F - Beispiel 4 c.

An den gealterten Mustern werden jetzt die jeweiligen Temperaturbereiche der Phaseninversion ("aufwärts" und "abwärts") bestimmt. Die nachfolgende tabellearische Zusammenstellung zeigt, daß zwar eine gewisse Einwirkung der Alterung auf den PIT-Bereich festzustellen ist, die Abweichungen halten sich jedoch in Grenzen, die aus dem Gesichtspunkt des praktischen Einsatzes vertretbar sind.

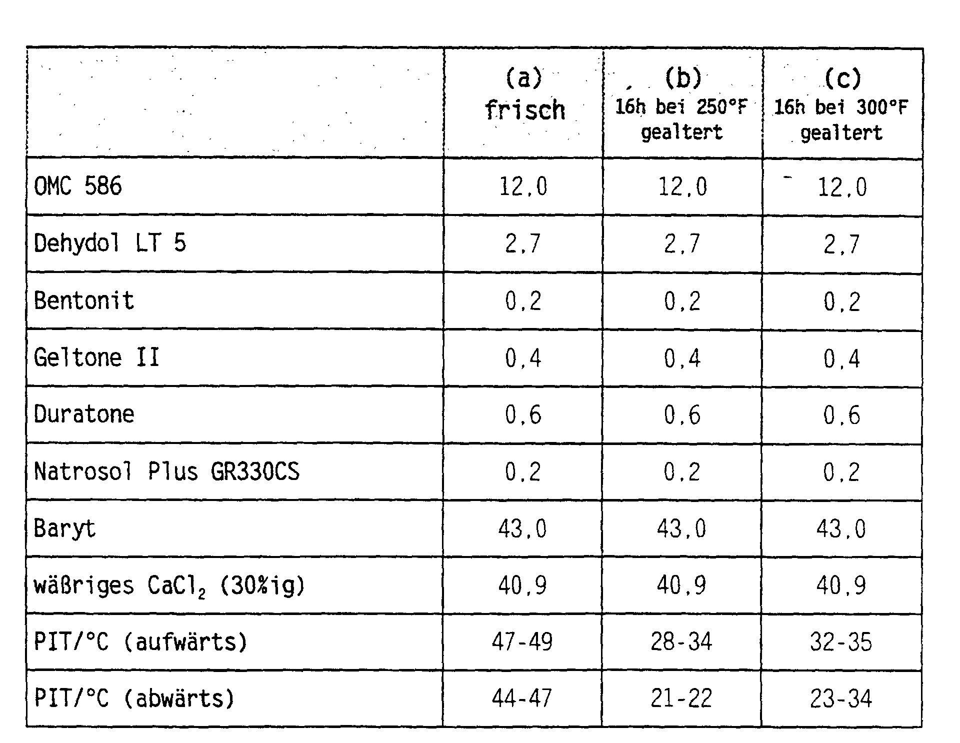

### Beispiel 5

In den beiden nachfolgenden Ansätzen wird die Ölphase nochmals ausgetauscht. Zum Einsatz kommt jetzt ein lineares α-OLefin "LAO (C_{14/16})". das als Handelsprodukt auf dem Markt ist und zum Einsatz als Ölphase für W/O-Invertspülungen in der Praxis verwendet wird.

In Anlehnung an die Ansätze des Beispiels 3 werden - bei gleichem Emulgator - zwei Spülungsansätze miteinander verglichen, die einmal die Ölphase/Wasserphase im Verhältnis 1 : 1 enthalten (Beispiel 5 a), zum anderen die Ölphase in einem stark abgemagerten Mengenverhältnis aufweisen. Die jeweils bestimmten Temperaturbereiche für die Phaseninversion - PIT/°C ("aufwärts") und PIT/°C ("abwärts") - sind in der nachfolgenden Tabelle den jeweiligen Rezepturansätzen zugeordnet.

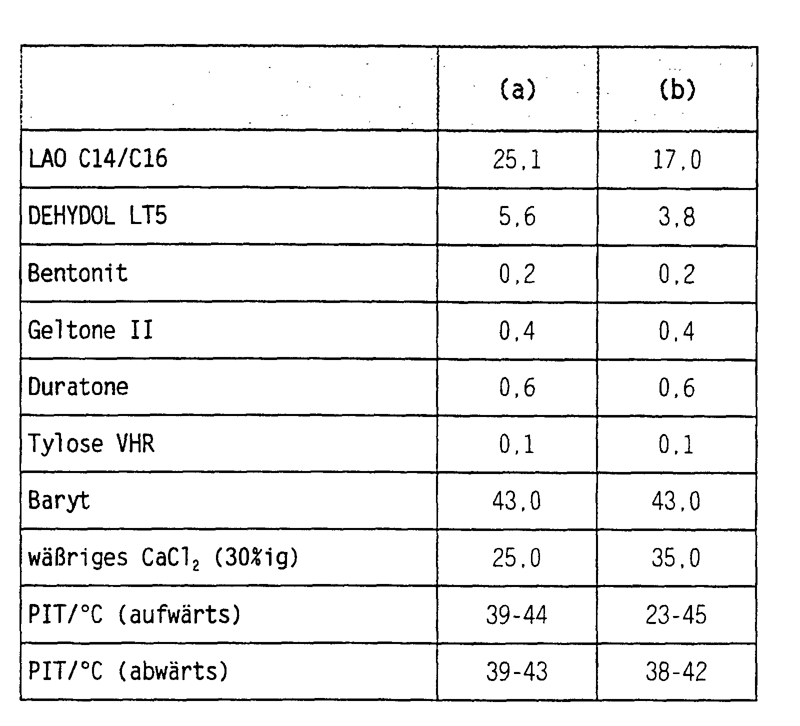

### Beispiel 6

In den nachfolgenden Ansätzen wird - unter Beibehaltung der Ölphase aus dem Beispiel 5 - das Emulgatorsystem geändert. Zum Einsatz kommt hier eine Emulgatorkombination aus einem vergleichsweise hydrophilen Polyol-Fettsäureester Cetiol HE, der in Kombination mit einem stärker hydrophobem Co-Emulgator (Dehymuls SML) verwendet wird.

Die Beispiele 6 a und 6 b arbeiten dabei mit Ansätzen der Ölphase/wäßrige Salzphase von 1 : 1 und sonst identischen Mengen an Zusatzstoffen, verändern jedoch das Mischungsverhältnis der beiden Komponenten der Emulgatorkombination. Der Vergleich der jeweils bestimmten Temperaturbereiche für die Phaseninversion - PIT/°C ("aufwärts") und PIT/°C ("abwärts") - zeigt, daß über die Variation der Mengenverhältnisse der Emulgatorkomponenten zueinander eine deutliche Steuerung der sich jeweils einstellenden PIT-Bereiche möglich wird. Die optimierte Anpassung des beziehungsweise der PIT-Bereiche an konzeptionelle Vorgaben wird damit technisch ermöglicht.

Der Ansatz des Beispiels 6 c variiert - im Sinne der vorherigen Beispiele - wiederum das Öl/Wasser-Verhältnis im Ansatz in Richtung-auf eine vergleichsweise Öl-arme Stoffmischung, gleichwohl ist auch hier der im praktischen Einsatz geforderte W/O-Inversions-Bereich nicht nur in der heißen Bohrung, sondern auch in vergleichsweise kühleren Außenbereichen der Zirkulierung der Bohrspülflüssigkeit gewährleistet.

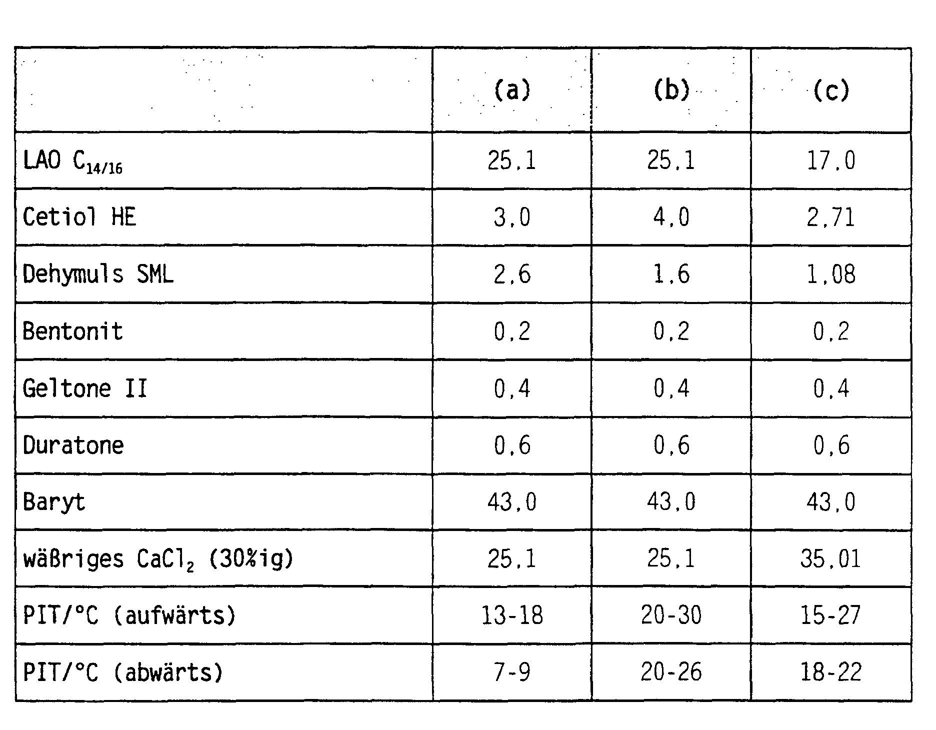

### Beispiel 7

Unter Einsatz des Emulgatorengemisches aus Beispiel 6 und einer Ölphase auf Basis des Esteröles OMC 586 werden zwei Bohrspülungssysteme mengenmäßig so aufeinander abgestimmt, daß die Phaseninversionstemperatur jeweils in dem Bereich von etwa 20 bis 30°C liegt.

Dabei wird das eine Spülungssystem mit gleichen Mengenanteilen an Ölphase und wäßriger 30 Gew.-%iger Calciumcloridlösung gewählt - Beispiel 7 a -. während im zweiten Fall mit einem Gewichtsverhältnis der Wasserphase zur Ölphase von etwa 2 : 1 gearbeitet wird.

Die Zusammensetzung der jeweiligen Spülungssysteme und der ermittelte Temperaturbereich der Phaseninversion - PIT/°C ("aufwärts") und PIT/°C ("abwärts") - sind in der nachfolgenden Tabelle zusammengefaßt.

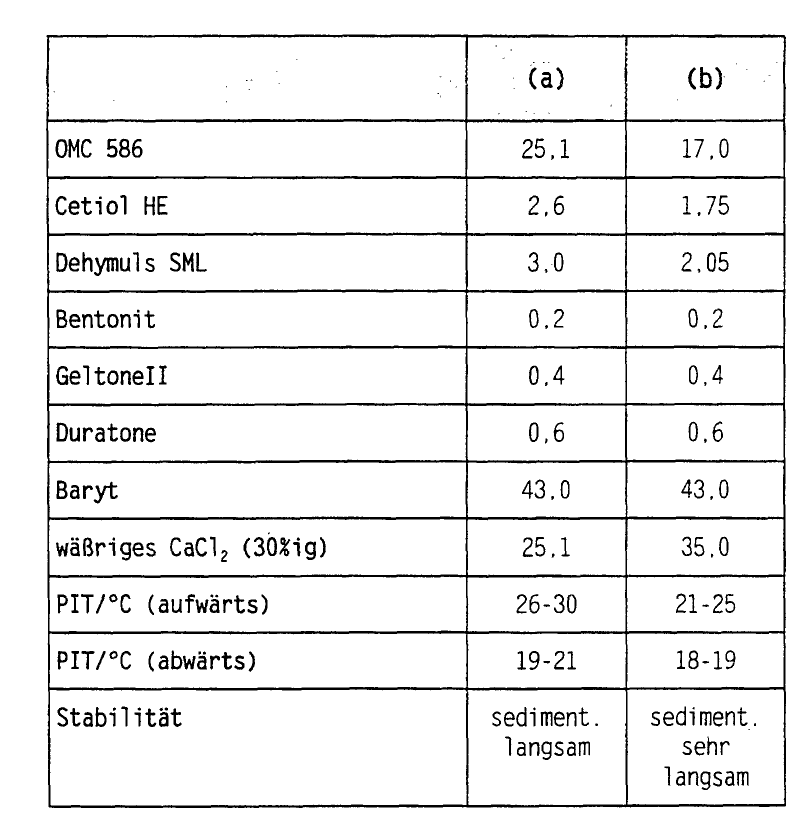

### Beispiel 8

Unter Einsatz der vergleichsweise ölarmen Mehrkomponentenmischung gem. Beispiel 7 b mit ihrem Temperaturbereich der Phaseninversion von etwa 20 bis 25°C werden eine Mehrzahl von Bohrspülsystemen auf Basis heute bekannter Ölphasen für das Gebiet der W/O-Invert-Bohrspülungen zusammengestellt. Dann werden am ungealterten und am gealterten Material die Viskositätskennwerte wie folgt bestimmt:

Messung der Viskosität bei 50°C in einem Fann-35-Viskosimeter der Firma Baroid Drilling Fluids INC. Es werden in an sich bekannter Weise bestimmt die Plastische Viskosität (PV), die Fließgrenze (YP) sowie die Gelstärke (lb/100 ft²) nach 10 sec. und 10 min.

Die Alterung der jeweiligen Bohrspülung gem. der Standardrezeptur aus Beispiel 7 b wird durch Behandlung für den Zeitraum von 16 h bei 250°F im Autoklaven - im sogenannten roller-oven - vorgenommen.

Nachfolgend sind die in der jeweiligen Rezeptur eingesetzten Ölphasen identifiziert und die am ungealterten und am gealterten Material bestimmten Kennzahlen in der tabellarischen Zusammenfassung aufgeführt.

Die ausgetesteten Mehrkomponentengemische entsprechen dabei jeweils der nachfolgenden Rezeptur:

| | |
|---|---|
| Ölphase | 76,5 g |
| Cetiol HE | 7,9 g |
| Dehymuls SML | 9,2 g |
| CaCl₂-Lösung (30%ig) | 157,5 g |
| Bentonit | 0,9 g |
| Geltone II | 1,8 g |
| Duratone HT | 2,7 g |
| Barite | 193,5 g |

### Beispiel 8 a

Als Ölphase kommt hier Rüböl als Triglycerid natürlichen Ursprungs zum Einsatz. Die am ungealterten und am gealterten Material bestimmten Kennzahlen sind in der nachfolgenden tabellarischen Zusammenfassung aufgeführt.

| | ungealtertes Material | gealtertes Material |
|---|---|---|
| Plastische Viskosität (PV) mPas | 37 | 45 |
| Fließgrenze (YP) lb/100 ft² | 15 | 14 |
| Gelstärke lb/100 ft² (10 sec.) | 6 | 8 |
| Gelstärke lb/100 ft² (10 min.) | 7 | 9 |

### Beispiel 8 b

Als Ölphase kommt hier der Di-n-Octylether Cetiol OE zum Einsatz. Die am ungealterten und am gealterten Material bestimmten Kennwerten sind wie folgt:

| | ungealtertes Material | gealtertes Material |
|---|---|---|
| Plastische Viskosität (PV) mPas | 59 | 51 |
| Fließgrenze (YP) lb/100 ft² | 24 | 19 |
| Gelstärke lb/100 ft² (10 sec.) | 5 | 5 |
| Gelstärke lb/100 ft² (10 min.) | 7 | 6 |

### Beispiel 8 c

Als geschlossene Ölphase kommt jetzt Isotridecyl-Alkohol zum Einsatz. Die am System bestimmten Werte sind wie folgt:

| | ungealtertes Material | gealtertes Material |
|---|---|---|
| Plastische Viskosität (PV) mPas | 37 | 20 |
| Fließgrenze (YP) lb/100 ft² | 18 | 8 |
| Gelstärke lb/100 ft² (10 sec.) | 6 | 4 |
| Gelstärke lb/100 ft² (10 min.) | 6 | 4 |

### Beispiel 8 d

Die hier eingesetzte Ölphase ist das Handelsprodukt XP07 der Firma Baroid. eine fließfähige Ölphase auf Basis gesättigter Paraffine.

Die bestimmten Wertzahlen sind in der folgenden Tabelle zusammengefaßt:

| | ungealtertes Material | gealtertes Material |
|---|---|---|
| Plastische Viskosität (PV) mPas | 50 | 42 |
| Fließgrenze (YP) lb/100 ft² | 15 | 16 |
| Gelstärke lb/100 ft² (10 sec.) | 4 | 5 |
| Gelstärke lb/100 ft² (10 min.) | 5 | 6 |

### Beispiel 8 e

Als Ölphase kommt hier ein α-Olefin C_{14/16} (70/30) vom LAO-Typ zum Einsatz. Die am gealterten und ungealterten System bestimmten Maßzahlen sind die Folgenden:

| | ungealtertes Material | gealtertes Material |
|---|---|---|
| Plastische Viskosität (PV) mPas | 50 | 46 |
| Fließgrenze (YP) lb/100 ft² | 15 | 18 |
| Gelstärke lb/100 ft² (10 sec.) | 4 | 5 |
| Gelstärke lb/100 ft² (10 min.) | 5 | 10 |

### Beispiel 8 f

Als Ölphase wird hier das Esteröl OMC 586 eingesetzt. An der ungealterten und der gealterten Spülung werden die folgenden Kennzahlen bestimmt:

| | ungealtertes Material | gealtertes Material |
|---|---|---|
| Plastische Viskosität (PV) mPas | 66 | 67 |
| Fließgrenze (YP) lb/100 ft² | 25 | 25 |
| Gelstärke lb/100 ft² (10 sec.) | 5 | 6 |
| Gelstärke lb/100 ft² (10 min.) | 6 | 6 |

### Beispiel 9

Die nachfolgende Tabelle faßt in den Beispielen 9a, 9b und 9c Rezepturen für Bohrspülemulsionen zusammen, in denen als Ölphase jeweils das Esteröl OMC 586 zusammen mit einer 30%igen wäßrigen Lösung von CaCl₂ zum Einsatz kommt. Die jeweils eingesetzten Emulgatorengemische aus Emulgatorhauptkomponente und Co-Emulgator sind ebenso wie die weiteren üblichen Mischungskomponenten der Bohrspülemulsionen in der nachfolgenden Tabelle den Beispielen 9a bis 9 c benannt und zugeordnet. In dieser Tabelle sind schließlich die am jeweiligen Mehrstoffgemisch bestimmten PIT-Temperaturbereiche angegeben.

| Beispiele | 9a | 9b | 9c |
|---|---|---|---|
| OMC 586 | 26,50 | 25,10 | 17,00 |
| Eumulgin EP 4 RS 1100 | 3,90 | 2,60 | 1,75 |
| Dehymuls SML | 2,02 | 3,00 | 2,05 |
| Bentonit | 0,23 | 0,20 | 0,20 |
| Geltone II | 0,64 | 0,40 | 0,40 |
| Duratone HT | 1,03 | 0,60 | 0,60 |
| Baryt | 36,18 | 43,0 | 43,0 |
| Ca(OH)₂ | 0,08 | | |
| CaCl₂-Lösung (30%ig) | 29,42 | 25,10 | 35,00 |
| PIT/°C (aufwärts) | 27-36 | 22-30 | 22-26 |
| PIT/°C (abwärts) | | 19-26 | 18-19 |

### Beispiel 10

Die Versuchsansätze dieses Beispiels - 10a bis 10g - setzen übereinstimmend in allen konkreten Rezepturen als Co-Emulgator einen W/O-Invert-Emulgator des Handels (EZ-Mul NTE der Fa. Baroid, Aberdeen) ein, der in der heutigen großtechnischen Praxis der Invertbohrspülungen Einsatz findet.

Dieser Co-Emulgator wird mit unterschiedlichen Emulgatorhauptkomponenten im Sinne der erfindungsgemäßen Definition kombiniert. Dabei werden die nachfolgenden Ölphasen - jeweils zusammen mit 30 Gew.-%iger wäßriger Calciumchloridlösung - zum Einsatz gebracht:
Beispiel 10 a
   Mineralöl Ha-359
Beispiele 10b bis 10e
   Esteröl OMC 586
Beispiele 10f und 10g
   lineares alpha-Olefin (LAO C_{14/16} (70/30))

Zusammen mit diesen Komponenten werden übliche Abmischungskomponenten für Bohrspülemulsionen eingemischt, die nach Art und Menge der nachfolgenden Tabelle zu entnehmen sind. In dieser Tabelle sind auch die jeweils bestimmten Temperaturbereiche der Phaseninversion (PIT/°C) zugeordnet.

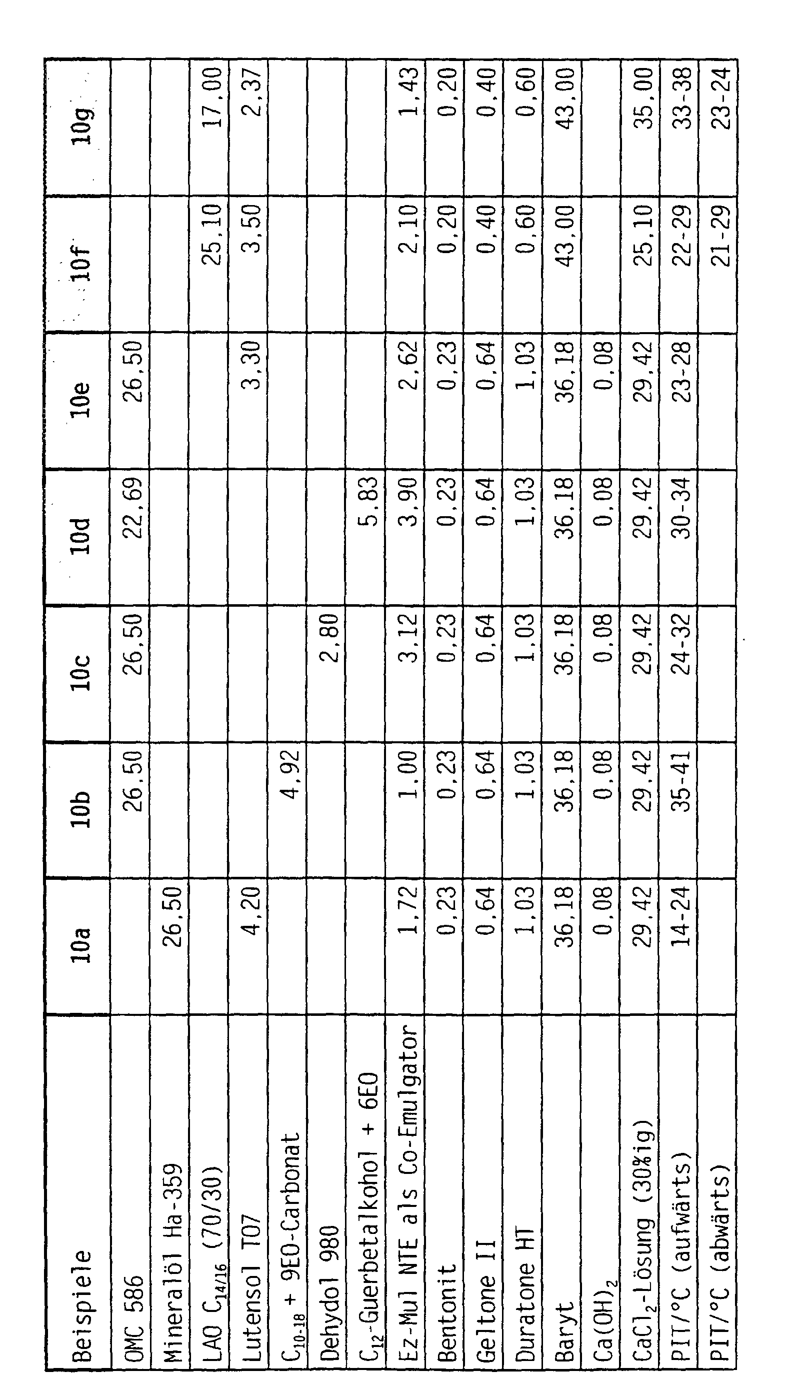

### Beispiel 11

Unter Einsatz der Esterölphase OMC 586 und einer 30 Gew.-%igen wäßrigen Calciumchloridlösung als Flüssigphase,werden in 5 Versuchsansätze die jeweils eingesetzten Öl/Wasser-Verhältnisse (Vol.-%) variiert - Es kommen die folgenden Öl/Wasser-Mischungsverhältnisse zum Einsatz: 40/60; 50/50; 60/40; 70/30; 80/20.

Als Emulgatorsystem wird in allen Ansätzen eine Abmischung von Lutensol TO5 als Emulgatorhauptkomponente und EZ-Mul NTE als Co-Emulgator verwendet.

Die nachfolgende Tabelle faßt zunächst die jeweils in dem Versuchsansatz vorliegenden Mengenanteile der 5 geprüften Abmischungen zusammen. An diesen Mehrkomponentengemischen werden dann jeweils vor Alterung (BHR) sowie nach Alterung (AHR) die Rheologie-Werte Plastische Viskosität (PV in mPas), Yield Point (YP in lb/100 ft²) und die Gelstärke (Gel 10''/10' in lb/100 ft²) bestimmt. Die Alterung der jeweiligen Bohrspülung erfolgt in konventioneller Weise bei 250°F für den Zeitraum von 16 Stunden im rolleroven. Die Bestimmung der Viskositätsdaten erfolgt ebenfalls in konventioneller Weise, s. hierzu im einzelnen die Angaben des Beispiels 8.

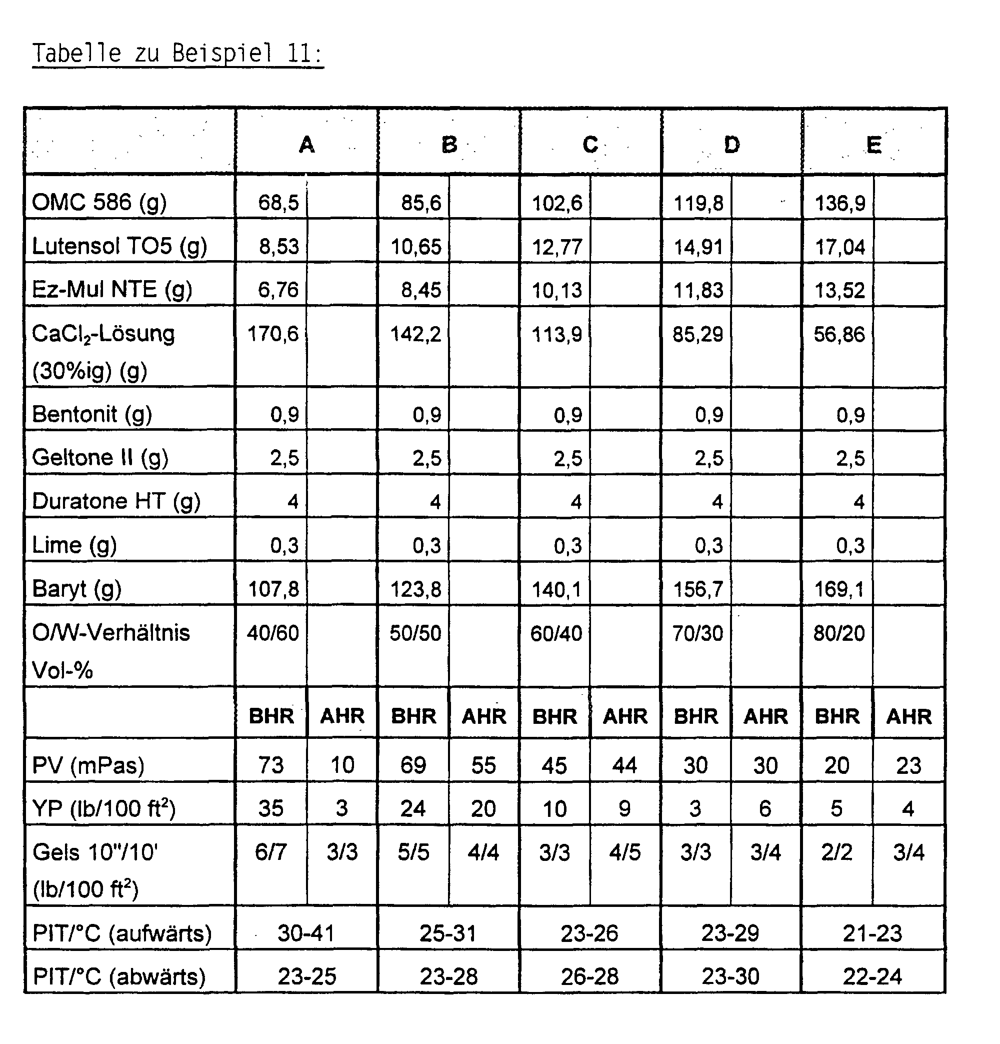

### Beispiel 12

Die nachfolgende Tabelle zeigt Versuchsreihen im Sinne der Erfindung unter Einsatz von Emulgatorsystemen, die APG-Verbindungen als Bestandteil der Emulgatorhauptkomponente(n) bzw. als alleinige Emulgatorhauptkomponente verwenden. Als APG-Komponente kommt dabei das von der Anmelderin unter dem Handelsnamen APG 600 vertriebene C₁₂₋₁₆-APG-Produkt zum Einsatz. Die verwendeten Produkte enthalten 51 Gew.-% Aktivsubstanz. Co-Emulgator ist in beiden Fällen auch hier wieder der in großtechnischem Einsatz befindliche W/O-Invertemulgator Ez-Mul NTE.

Die nachfolgende Tabelle zeigt die Zusammensetzung der Bohrspülemulsionen in Gew.-%, sowie die Temperaturbereiche (PIT/°C aufwärts) für die Phaseninversion.

| | Beispiel 12a | Beispiel 12b | Beispiel 12c | Beispiel 12d |
|---|---|---|---|---|
| | | | | |
| OMC 586 | 26,50 | 26,50 | 26,5 | 26,5 |
| Lutensol TO5 | 1,65 | | | |
| APG 600 | 1,65 | 3,30 | 5.12 | 5,70 |
| Ez-Mul NTE | 2,62 | 2,62 | 3,30 | 3,00 |
| Bentonit | 0,23 | 0,23 | 0,23 | 0,23 |
| Geltone II | 0,64 | 0,64 | 0,64 | 0,64 |
| Duratone HT | 1,03 | 1,03 | 1,03 | 1,03 |
| Baryt | 36,18 | 36,18 | 36,18 | 36,18 |
| Ca(OH)₂ | 0,08 | 0,08 | 0,08 | 0,08 |
| CaCl₂-Lösung(30%ig) | 29,42 | 29,42 | 26,92 | 26,64 |
| PIT/°C (aufwärts) | 20-22 | 46-49 | 10,6-14,7 | 22,4-27,5 |
| PIT/°C (abwärts) | | | 9,9-14,3 | 22,0-27,0 |
| Stabilität | sediment. langsam | sediment. langsam | | |

### Beispiel 13

In einem weiteren Versuch wird eine Bohrspül-Invertemulsion unter Mitverwendung von Rüböl als Triglycerid natürlichen Ursprungs untersucht. Das Beispiel verwendet eine Abmischung von 1 Gewichtsteil Rüböl-und etwas mehr als 4 Gewichtsteilen des Esteröls OMC 586 als Ölphase.

Die gewichtsmäßige Zusammensetzung (in g) des geprüften Emulsionsansatzes findet sich in der nachfolgenden Tabelle. Gem. den Angaben des Beispiels 8 wird die Bohrspülemulsion bei 250°F für einen Zeitraum von 16 Stunden gealtert und dann bei 50°C in der in Beispiel 8 geschilderten Weise zu ihren wesentlichen Rheologiedaten untersucht. Die jeweils gefundenen Zahlenwerte vor Alterung (BHR) und nach Alterung (AHR) sind in der nachfolgenden Tabelle dem Spülungsansatz zugeordnet.

Den nicht gealterten und den gealterten Spülungsansätzen sind schließlich die ermittelten PIT-Temperaturen zugeordnet. Dabei sind als Zahlenwert die Temperaturen benannt, bei der die Leitfähigkeit 0 mS/cm erreicht.

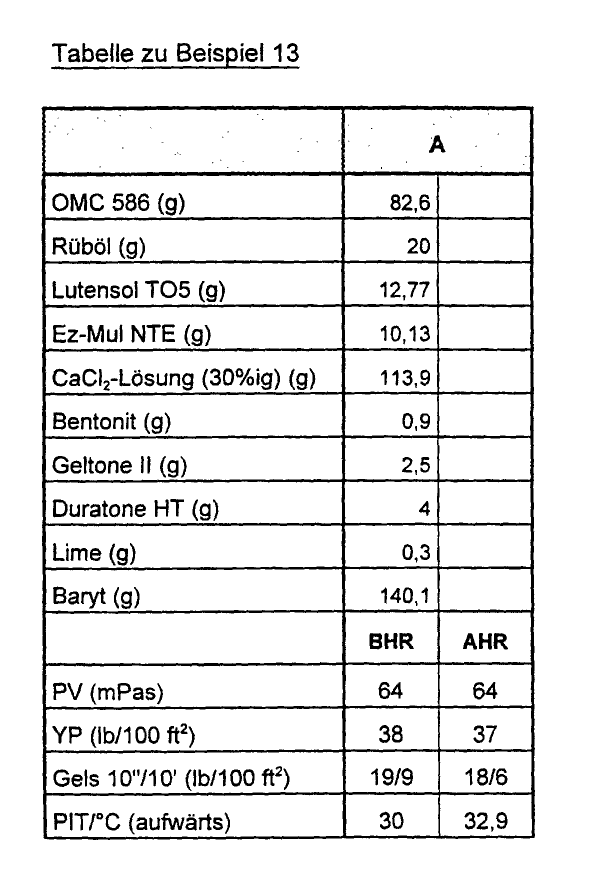

## Patentansprüche

1. Verwendung von Emulgatoren beziehungsweise Emulgatorsystemen mit einer Phaseninversionstemperatur (PIT) im Bereich von 0 bis 100°C zur temperaturabhängigen Ausbildung von O/W- beziehungsweise W/O-Emulsionen aus Wasser- und Öl-basierten Flüssigphasen (bei Temperaturen unterhalb PIT O/W-Emulgierung und bei Temperaturen oberhalb PIT W/O-Invertemulgierung) im Rahmen der Herstellung und des Einsatzes fließ- und pumpfähiger, gegebenenfalls mit feinteiligen Feststoffen beladener Emulsionen für die Erbohrung von Erdreich.

2. Verwendung nach Anspruch 1 **dadurch gekennzeichnet, daß** mit einer PIT des Mehrkomponentengemisches im Bereich von 5 bis 60°C, vorzugsweise im Bereich von 10 bis 50°C und insbesondere im Bereich von 15 bis 35°C gearbeitet wird.

3. Verwendung nach Ansprüchen 1 bis 2, **dadurch gekennzeichnet, daß** fließ- und pumpfähige Emulsionssysteme hergestellt und eingesetzt werden, deren O/W-Volumenverhältnis innerhalb der folgenden Bereiche liegt ;
15 - 60 Teile Öl / 85 - 40 Teile Wasser, vorzugsweise 15- 50 Teile Öl / 85 - 50 Teile.

4. Verwendung nach Ansprüchen 1 bis 3, **dadurch gekennzeichnet, daß** Emulgator-Hauptkomponenten mit HLB-(number)Werten des HLB(number)Bereichs von 6 bis 20, vorzugsweise von 7 bis 18 vorliegen. die in einer bevorzugten Ausführungsform gemeinsam mit stärker lipophilen Co-Emulgatoren mit - bezogen auf die Emulgator-Hauptkomponente(n) - niedrigerem HLB-(number)Wert zum Einsatz kommen.

5. Verwendung nach Ansprüchen 1 bis 4, **dadurch gekennzeichnet, daß** als nichtionische Emulgatorkomponenten (Emulgator-Hauptkomponenten und/oder Co-Emulgatoren) Vertreter aus wenigstens einer der nachfolgenden Stoffklassen vorliegen:
(Oligo)-Alkoxylate- insbesondere Ethoxylate und/oder Propoxylate - von lipophile Reste enthaltenden und zur Alkoxylierung befähigten Grundmolekülen natürlichen und/oder synthetischen Ursprungs, wobei die Alkoxylate auch Endgruppen-verschlossen sein können. Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. die auch (Oligo)-Alkoxylatreste - insbesondere entsprechende Oligo-Ethoxylatreste - in die Molekülstruktur eingebaut enthalten können, Alkyl(poly)Glykoside langkettiger Alkohole. Fettalkuhole natürlichen und/oder synthetischen Ursprungs, Alkylolamide, Aminoxide und Lecithine.

6. Verwendung nach Ansprüchen 1 bis 5, **dadurch gekennzeichnet, daß** die Emulgatoren/Emulgatorsysteme in ihrer Einsatzmenge im Mehrkomponentengemisch auf den hier vorliegenden Anteil an Ölphase abgestimmt sind und dabei bevorzugt in Mengen gleich/größer 1 Gew.-% vorzugsweise in Mengen von 5 bis 60 Gew.-% (bezogen jeweils auf Ölphase) vorliegen, wobei besonders bevorzugte Mengenbereiche für diese Emulgatoren - wiederum bezogen auf die Ölphase - wie folgt definiert sind: 10 bis 50 Gew.-%. 15 bis 40 Gew.-% und insbesondere 20 bis 35 Gew.-%.

7. Verwendung nach Ansprüchen 1 bis 6, **dadurch gekennzeichnet, daß** die Emulgator-freie Ölphase zum wenigstens überwiegenden Anteil unlöslich in der wäßrigen Emulsionsphase sowie vorzugsweise auch bei Raumtemperatur fließ- und pumpfähig ist und dabei Flammpunkte oberhalb 60°C vorzugsweise gleich/größer 80 bis 100°C und insbesondere gleich/größer 120°C aufweist.

8. Verwendung nach Ansprüchen 1 bis 7, **dadurch gekennzeichnet, daß** die Ölphase im Temperaturbereich von 0 bis 10°C eine Brookfield(RVT)-Viskosität von nicht mehr als 55 mPas, vorzugsweise von nicht mehr als 45 mPas aufweist.

9. Verwendung nach Ansprüchen 1 bis 8, **dadurch gekennzeichnet, daß** Ölphasen beziehungsweise Ölmischphasen vorliegen, die wenigstens anteilsweise - bevorzugt zum wenigstens überwiegenden Anteil - den nachfolgenden Stoffklassen zugeordnet sind:
Gesättigte Kohlenwasserstoffe (geradkettig, verzweigt und/oder zyklisch), olefinisch ungesättigte, Kohlenwasserstoffe, insbesondere vom Typ linearer α-Olefine, polymerer α-O1efine, interner Olefine, Aromaten, Naphthene, Carbonsäureester 1- und/oder mehrwertiger Alkohole, Ether, Acetale, Kohlensäureester, Fettalkohole, Silikonöle, (Oligo)-Amide, (Oligo)-Imide, (Oligo)-Ketone.

10. Verwendung nach Ansprüchen 1 bis 9, **dadurch gekennzeichnet, daß** sein Mengenverhältnis (Volumenteile) von wasserbasierter Phase (W) zu Ölphase (Öl) in den folgenden Bereichen liegt: 90 bis 10 W / 10 bis 90 Öl, bevorzugt 85 bis 20 W / 15 bis 80 Öl.

11. Verwendung nach Ansprüchen 1 bis 10, **dadurch gekennzeichnet, daß** der Wasser-basierte Anteil (W)(Vol. -% bezogen auf Mischung W/Öl) gleich/größer 30 bis 35%. vorzugsweise gleich/größer 40%. weiterhin bevorzugt gleich/größer 50% liegt,

12. Verwendung nach Ansprüchen 1 bis 11, **dadurch gekennzeichnet, daß** es als Bohrschlamm für die landgestützte und/oder bevorzugt off-shore-Erbohrung von Erdreich, insbesondere zur Erschließung von Ölund/oder Gasvorkommen ausgebildet ist, wobei Bohrschlämme mit einer PIT im Temperaturbereich gleich/kleiner 50°C und insbesondere im Bereich von 20 bis 35°C besonders bevorzugt sind.

13. Verwendung nach Ansprüchen 1 bis 12, **dadurch gekennzeichnet, daß** die PIT des Gesamtsystems derart auf die Einsatzbedingungen des BohrSchlammes abgestimmt ist, daß die mit Bohrschlamm beladenen cuttings nach ihrer Abtrennung vom Bohrschlamm durch eine Wäsche mit kaltem Wasser - insbesondere mit Meerwasser - und bevorzugt unter Phaseninversion W/O zu O/W gereinigt werden können.

14. Verwendung nach Ansprüchen 1 bis 13, **dadurch gekennzeichnet, daß** das als Bohrschlamm ausgebildete Gemisch im Temperaturbereich von 10 bis 15°C oberhalb der Grenztemperatur zwischen Emulsions-Mittelphase und W/O-Invertbereich eine Plastische Viskosität (PV) nicht größer 100 mPas, vorzugsweise nicht größer 80 mPas, insbesondere im Bereich von 30 bis 45 mPas und eine Fließgrenze (YP) nicht größer 80 lb/100 ft², vorzugsweise nicht größer 50 lb/100 ft² und insbesondere im Bereich von 10 bis 25 lb/100 ft², aufweist.

15. Verwendung nach Ansprüchen 1 bis 14, **dadurch gekennzeichnet, daß** sie bei ihrer Ausbildung als Bohrschlamm zusätzlich in diesem Einsatzgebiet übliche Hilfsstoffe wie Viskositätsbildner, Fluid-loss-Additive, feinteilige Beschwerungsstoffe, wasserlösliche organische und/oder anorganische Hilfsstoffe wie mehrwertige niedere Alkohole, ihre Oligomeren und/oder (Oligo)-Alkoxylate. anorganische und/oder organische wasserlösliche Salze, gewünschtenfalls Alkalireserven und/oder Biocide enthalten.

16. Verwendung nach Ansprüchen 1 bis 15, **dadurch gekennzeichnet, daß** es in der wäßrigen Phase gelöste Polymerverbindungen enthält, die insbesondere im Temperaturbereich unterhalb PIT (O/W-Emulsion) eine Entmischung des Mehrphasen-Systems zusätzlich verhindern.

## Claims

1. The use of emulsifiers or emulsifier systems with a phase inversion temperature (PIT) of 0 to 100°C for the temperature-dependent formation of o/w and w/o emulsions from water- and oil-based liquid phases (o/w emulsification at temperatures below the PIT and w/o invert emulsification at temperatures above the PIT) in the production and use of flowable and pumpable emulsions optionally charged with fine-particle solids for geological exploration.

2. The use claimed in claim 1, **characterized in that** the multicomponent mixture is used with a PIT of 5 to 60°C, preferably 10 to 50°C and, more preferably, 15 to 35°C.

3. The use claimed in claims 1 and 2, **characterized in that** flowable and pumpable emulsion systems with an o/w ratio by volume in the following ranges are produced and used: 15-60 parts oil : 85-40 parts water, preferably 15-50 parts oil: 85-50 parts.

4. The use claimed in claims 1 to 3, **characterized by** the presence of principal emulsifier components with HLB values of 6 to 20 and preferably 7 to 18 which, in one preferred embodiment, are used together with relatively highly lipophilic co-emulsifiers with a lower HLB value compared with the principal emulsifier component(s).

5. The use claimed in claims 1 to 4, **characterized in that** the nonionic emulsifier components present (principal emulsifier components and/or co-emulsifiers) are representatives of at least one of the following classes: (oligo)alkoxylates, more particularly ethoxylates and/or propoxylates, of basic molecules of natural and/or synthetic origin which contain lipophilic residues and which are capable of alkoxylation, the alkoxylates optionally being end-capped, partial esters and/or partial ethers of polyhydric alcohols containing in particular 2 to 6 carbon atoms and 2 to 6 OH groups and/or oligomers thereof with acids and/or alcohols which contain lipophilic residues and which may also contain (oligo)alkoxylate residues - particularly corresponding oligoethoxylate residues - incorporated in the molecular structure, alkyl (poly)glycosides of long-chain alcohols, fatty alcohols of natural and/or synthetic origin, alkylolamides, amine oxides and lecithins.

6. The use claimed in claims 1 to 5, **characterized in that** the emulsifiers/emulsifier systems are adapted in the quantity used in the multicomponent mixture to the percentage of oil phase therein and are present in quantities of preferably 1% by weight or larger and more preferably in quantities of 5 to 60% by weight (based on oil phase), particularly preferred quantity ranges for these emulsifiers, again based on the oil phase, being defined as follows: 10 to 50% by weight, 15 to 40% by weight and more particularly 20 to 35% by weight.

7. The use claimed in claims 1 to 6, **characterized in that** the emulsifier-free oil phase is at least predominantly insoluble in the aqueous emulsion phase and is preferably flowable and pumpable even at room temperature and has flash points above 60°C, preferably in the range from 80 to 100°C or higher and more preferably of 120°C or higher.

8. The use claimed in claims 1 to 7, **characterized in that** the oil phase has a Brookfield (RVT) viscosity at 0 to 10°C of not more than 55 mPas and preferably not more than 45 mPas.

9. The use claimed in claims 1 to 8, **characterized by** the presence of oil phases or mixed oil phases belonging at least partly and preferably at least predominantly to the following classes: saturated hydrocarbons (linear, branched and/or cyclic), olefinically unsaturated hydrocarbons, more particularly of the linear α-olefin, the polymeric α-olefin or internal olefin type, aromatic hydrocarbons, naphthenes, carboxylic acid esters of monohydric and/or polyhydric alcohols, ethers, acetals, carbonic acid esters, fatty alcohols, silicone oils, (oligo)amides, (oligo)imides, (oligo)ketones.

10. The use claimed in claims 1 to 9, **characterized in that** the quantity ratio (parts by volume) of water-based phase (W) to oil phase (oil) is in the following ranges: 90 to 10 W:10 to 90 oil, preferably 85 to 20 W:15 to 80 oil.

11. The use claimed in claims 1 to 10, **characterized in that** the water-based part (W) makes up 30 to 35% by volume or more, preferably 40% by volume or more and, more preferably, 50% by volume or more of the W/oil mixture.

12. The use claimed in claims 1 to 11, **characterized in that** it is formulated as a drilling mud for land-supported and/or preferably offshore exploration, more particularly for the development of oil and/or gas occurrences, drilling muds with a PIT of 50°C or lower and more especially in the range from 20 to 35°C being preferred.

13. The use claimed in claims 1 to 12, **characterized in that** the PIT of the system as a whole is adapted to the conditions under which the drilling mud is used in such a way that, after separation from the drilling mud, the mud-covered cuttings can be cleaned by washing with cold water, especially seawater, preferably with phase inversion from w/o to o/w.

14. The use claimed in claims 1 to 13, **characterized in that**, at a temperature 10 to 15°C above the limit between the middle emulsion phase and the w/o invert range, the mixture formulated as a drilling mud has a plastic viscosity (PV) of not more than 100 mPas, preferably not more than 80 mPas and, more preferably, in the range from 30 to 45 mPas and a yield point (YP) of not more than 80 lb/100 ft5, preferably not more than 50 lb/ft5 and, more preferably, in the range from 10 to 25 lb/ft5.

15. The use claimed in claims 1 to 14, **characterized in that**, where it is formulated as a drilling mud, it additionally contains typical auxiliaries, such as thickeners, fluid loss additives, fine-particle weighting additives, water-soluble organic and/or inorganic auxiliaries, such as lower polyhydric alcohols, oligomers thereof and/or (oligo)alkoxylates, inorganic and/or organic water-soluble salts, optionally alkali reserves and/or biocides.

16. The use claimed in claims 1 to 15, **characterized in that** it contains polymer compounds dissolved in the aqueous phase which additionally prevent separation of the multiphase system, particularly at temperatures below the PIT (o/w emulsion).

## Revendications

1. Utilisation d'agents émulsionnants ou de systèmes d'agents émulsionnants ayant une température d'inversion de phase (PIT) dans la zone de 0 à 100°C pour la formation sous la dépendance de la température d'émulsions O/W ou W/O à partir de phases liquides à base d'eau et d'huile à des températures inférieures à l'émulsion PIT O/W et à des températures supérieures à l'émulsion inverse W/O PIT dans le cadre de la production et de l'utilisation d'émulsions aptes à l'écoulement et au pompage, chargées éventuellement avec des matières solides finement divisées, pour la découverte par forage des sols.

2. Utilisation selon la revendication 1,
**caractérisée en ce qu'**
on opère avec un PIT du mélange multicomposants dans la zone de 5 à 60°C de préférence dans la zone de 10 à 50°C, et en particulier dans la zone de 15 à 35°C.

3. Utilisation selon l'une quelconque des revendications 1 à 2,
**caractérisée en ce que**
des systèmes d'émulsion aptes à l'écoulement et au pompage sont préparés et mis en oeuvre dont le rapport en volumes O/W se situe à l'intérieur des plages suivantes :
15-60 parties d'huile / 85-40 parties d'eau, de préférence 15-50 parties d'huile / 85-50 parties d'eau.

4. Utilisation selon l'une quelconque des revendications 1 à 3,
**caractérisée en ce que**
les composants principaux de l'agent émulsionnant se présentent avec des valeurs (nombre) HLB de la plage (nombre) d'HLB allant de 6 à 20, de préférence de 7 à 18 qui viennent à utilisation dans un mode d'exécution préféré conjointement avec des agents co-émulsionnants fortement lipophiles avec rapporté à (aux) composant(s) principal (principaux) de l'agent émulsionnant, une valeur (nombre) d'HLB inférieure.

5. Utilisation selon l'une quelconque des revendications 1 à 4,
**caractérisée en ce que**
comme composants de l'agent émulsionnant non ioniques (composants principaux de l'agent émulsionnant et/ou agents co-émulsionnants), sont présents en tant que représentants dans au moins une des classes de substances, suivantes : (oligo)alkoxylates, en particulier éthoxylates et/ou propoxylates de molécules de base contenant des restes lipophiles et aptes à l'alkoxylation, d'origine naturelle et/ou synthétique, pour lesquels les alkoxylates peuvent étre aussi bloqués sur les groupes terminaux, des esters partiels et/ou des éthers partiels d'alcools plurifonctionnels ayant en particulier de 2 à 6 atomes de carbone et de 2 à 6 groupes OH et/ou leurs oligomères avec des acides et/ou des alcools contenant des restes lipophiles qui peuvent contenir, incorporés dans la structure moléculaire, des restes (oligo)alkoxy, en particulier des restes éthoxylate correspondants ; des alkyl(poly)glycosides d'alcools à longue chaîne, des alcools gras d'origine naturelle et/ou synthétiques ; des alkylolamides, des oxydes d'amine et des lécithines.

6. Utilisation selon l'une quelconque des revendications 1 à 5,
**caractérisée en ce que**
les agents émulsionnants/ systèmes d'agents émulsionnants sont coordonnés dans leur quantité utilisée dans le mélange multicomposants à la proportion présente ici de phase huileuse et pour cela se présentent de préférence en quantités égales/supérieures à 1 % en poids, de préférence en quantités de 5 à 60 % en poids (à chaque fois rapporté à la phase huileuse) pour lesquelles des plages en quantité particulièrement préférées pour ces agents émulsionnants, à nouveau rapporté à la phase huileuse, sont définies comme suit :
10 à 50 % en poids
15 à 40 % en poids
et en particulier de 20 à 35 % en poids.

7. Utilisation selon l'une quelconque des revendications 1 à 6,
**caractérisée en ce que**
la phase huileuse exempte d'agent émulsionnant est pour au moins une proportion prédominante, insoluble dans la phase d'émulsion aqueuse ainsi que de préférence aussi est apte à l'écoulement et au pompage à température ambiante et possède ainsi des points d'inflammation au dessus de 60°C, de préférence égaux ou supérieurs à 80 à 100°C et en particulier égaux ou supérieurs à 120°C.

8. Utilisation selon l'une quelconque des revendications 1 à 7,
**caractérisée en ce que**
la phase huileuse dans la zone de températures allant de 0 à 10°C, possède une viscosité Brookfield (RVT) inférieure à 55 mPas, de préférence inférieure à 45 mPas.

9. Utilisation selon l'une quelconque des revendications 1 à 8,
**caractérisée en ce qu'**
il y a des phases huileuses ou des phases de mélange huileux qui sont attribuées au moins partiellement de préférence pour au moins une proportion prédominante, aux classes de substances suivantes
hydrocarbures saturés (à chaine droite, ramifiés et/ou cycliques), des hydrocarbures non saturés olefiniquement, en particulier du type des α-oléfines linéaires, des α-oléfines polymères, des oléfines internes, des produits aromatiques, des naphtalènes, des esters d'acide carboxylique d'alcool mono- et/ou d'alcool, mono- et/ou plurivalents des éthers, des acétales, des esters d'acide carbonique, des alcools gras, des huiles de silicone, des (oligo)amides, des (oligo)imides et des (oligo)cétones.

10. Utilisation selon l'une quelconque des revendications 1 à 9,
**caractérisée en ce que**
son rapport en quantités (parties en volume) de la phase à base d'eau (W) par rapport à la phase huileuse (huile) se situe dans les plages suivantes :
90 à 10 W / 10 à 90 huile, de préférence 85 à 20 W / 15 à 80 huile.

11. Utilisation selon l'une quelconque des revendications 1 à 10,
**caractérisée en ce que**
la fraction à base d'eau (W) (% en volume rapporté au mélange W huile se situe égal ou supérieur à 30 à 35 %, de préférence égal ou supérieur à 40 %, en outre de préférence égal ou supérieur à 50 %.

12. Utilisation selon l'une quelconque des revendications 1 à 11,
**caractérisée en ce qu'**
il est formé sous forme de boues de forage pour le forage à terre et/ou de préférence off shore de terrains, en particulier pour la découverte de gisements pétroliers et/ou de gaz, pour lequel on préfère particulièrement des boues de forage ayant un PIT dans la plage de températures égale ou inférieure à 50°C et en particulier dans la plage de 20 à 35°C.

13. Utilisation selon l'une quelconque des revendications 1 à 12,
**caractérisée en ce que**
le PIT du système total est mis en accord avec les conditions d'utilisation des boues de forage de telle façon que les coupes chargées avec de la boue de forage puissent étre purifiés après leur séparation de la boue de forage, par un lavage avec de l'eau froide, en particulier avec de l'eau de mer et de préférence avec inversion de phase W/O en O/W.

14. Utilisation selon l'une quelconque des revendications 1 à 13,
**caractérisée en ce que**
le mélange formé sous forme de boue de forage possède dans la plage de températures allant de 10 à 15°C au-dessus de la température limite entre la phase médiane d'émulsion et la zone inverse W/O une viscosité plastique (PV) qui n'est pas plus grande que 100 mPas, de préférence pas plus grande que 80 mPas, en particulier dans la zone de 30 à 45 mPas et une limite d'écoulement (YP) qui n'est pas plus grande que 80 livres/100 ft² (pieds carrés) (5,44 at) de préférence pas plus grande que 50 livres/ 100 ft² (pieds carrés) (0,68 at à 1,70 at) et en particulier dans la zone de 10 à 25 livres/100 ft² (pieds carrés).

15. Utilisation selon l'une quelconque des revendications 1 à 14,
**caractérisée en ce qu'**
elles renferment lors de leur formation sous forme de boue de forage, en supplément dans ce domaine d'utilisation des adjuvants usuels comme des agents de formation de la viscosité, des additifs pour éviter les pertes de liquide, des substances d'alourdissement finement divisées, des adjuvants organiques et/ou minéraux, solubles dans l'eau comme des alcools inférieurs plurifonctionnels, leurs oligomêres et/ou leurs (oligo)alkoxylates, des sels solubles dans l'eau minéraux et/ou organiques, si désiré des réserves d'alcali et/ou des biocides.

16. Utilisation selon l'une quelconque des revendications 1 à 15,
**caractérisée en ce qu'**
elle contient dans la phase aqueuse des composés polymères dissous, qui empêchent en supplément, en particulier dans la plage de températures en dessous de PIT (émulsion O/W une démixtion du système à plusieurs phases.
